# EUROPEAN PATENT SPECIFICATION

(11) **EP 4 525 624 B1**
(45) Date of publication and mention of the grant of the patent: **29.04.2026**
(21) Application number: 23725313.3
(22) Date of filing: 15.05.2023
(51) Int. Cl.: A21B 1/48, A21B 3/04

(54) **TUNNEL OVEN AND METHOD FOR THE PREPARATION OF FOOD PRODUCTS**
TUNNELOFEN UND VERFAHREN ZUR HERSTELLUNG VON LEBENSMITTELPRODUKTEN
FOUR TUNNEL ET PROCÉDÉ DE PRÉPARATION DE PRODUITS ALIMENTAIRES

(30) Priority: 16.05.2022 NL 2031866
(43) Date of publication of application: 26.03.2025
(73) Proprietor: Kaak Groep B.V., 7061 GA Terborg (NL)
(72) Inventor: VEROUDEN, Franciscus Quirinus Fredrik, 7061 GA Terborg (NL); VAN WEZEL, Michel Martinus Willem, 7061 GA Terborg (NL); REULING, Mathijs Cornelis Theodorus, 7061 GA Terborg (NL); KOKKOTI, Maria, 7061 GA Terborg (NL)
(74) Representative: Peters, Sebastian Martinus
(86) International application number: PCT/NL2023/050267
(87) International publication number: WO 2023/224472

(56) References cited:
- DE-A1- 2 102 692
- DE-A1- 2 201 884
- DE-B- 1 071 612
- DE-C- 565 523
- SU-A1- 1 163 819
- US-A- 4 569 658
- US-A1- 2013 004 639

## Description

### BACKGROUND

The invention relates to a tunnel oven for the preparation of food products, in particular for baking dough products. Furthermore, the invention relates to a method for controlling a tunnel oven for the preparation of food products, in particular for baking dough products.

For the preparation of food products, in particular dough products, in an industrial setting, use is made of large elongated ovens with an open entrance on one end and an open exit on the opposite end of the elongated oven. Such ovens are more commonly referred to as tunnel ovens. In such tunnel ovens, food products are continuously conveyed through the tunnel oven during which the food products are baked and/or cooked as the food products travel along the length of the tunnel oven. In particular for baking dough products such as bread, long or elongated breads, rolls, buns, baguettes, Parisian breads, round loaves, ciabatta, pizza bottoms, pancakes, pastries, etc., the preparation of at least these food products requires an addition of a pretreatment agent, such as moisture, to the food products before they are baked and/or cooked. This is usually achieved by exposing the food products to steam in a pretreatment zone just after the entrance of the tunnel oven, such that the food products travel through the pretreatment zone before entering a baking chamber of the tunnel oven.

Furthermore, tunnel ovens are commonly provided with an exhaust, commonly arranged in a part of the tunnel oven close to the exit, in order to extract gasses and/or moisture from the baking chamber. Document SU 1163819 A discloses a tunnel oven according to the preamble of claim 1.

### SUMMARY OF THE INVENTION

During operation of the tunnel oven, the combination of an open entrance and an open exit of the tunnel oven, and the exhaust, results in a draft of ambient air through both the entrance and exit in order to replace the air extracted from the baking chamber via the exhaust. A disadvantage of this draft of ambient air, in particular through the entrance opening is, that said ambient air will flow uncontrolled through the pretreatment zone which will disturb the pretreatment process, such as the steam treatment, of the products in the pretreatment zone.

It is an object of the present invention to provide an improved tunnel oven, wherein a disturbance of the pretreatment zone is at least reduced and preferably is avoided.

According to a first aspect, the invention provides a tunnel oven for the preparation of food products, wherein the tunnel oven comprises:
a tunnel oven entrance, a tunnel oven exit and a baking zone inside said tunnel oven between the tunnel oven entrance and the tunnel oven exit,
a transport device configured for transporting food products into the tunnel oven entrance, through the baking zone, and out of the tunnel oven exit,
a heating source arranged in the baking zone,
an air exhaust configured for extracting air from the baking zone, and
a pretreatment zone, arranged in between the baking zone and the tunnel oven entrance, wherein the pretreatment zone comprises an injector configured for injecting a pretreatment agent into the pretreatment zone, and wherein the pretreatment zone does not comprise an air exhaust at or near a top wall of the pretreatment zone,
wherein the tunnel oven further comprises a pressure balancing unit configured for controlling a pressure difference between a first air pressure in the pretreatment zone and a second air pressure in the baking zone, wherein said pressure balancing unit is configured for substantially reducing or nullifying an airflow into the pretreatment zone via the tunnel oven entrance.

In the tunnel oven of the invention, the pretreatment zone is not provided with an air exhaust at or near the top wall of the pretreatment zone. An advantage of this is, that the pretreatment agent is substantially not or at least to a lesser extent, extracted from the pretreatment zone, at least not via an air exhaust, and thereby, when in use, the amount of pretreatment agent used in the tunnel oven can be reduced. In particular when the pretreatment agent comprises steam, reducing the amount of steam needed in the tunnel oven yields a large energy saving, since steam requires a relatively large amount of energy for its production.

It is noted that outside the tunnel oven there is an ambient air pressure, which is commonly about 1 atmosphere (atm). Due to the extraction of air from the baking zone, when the tunnel oven is in use, the air pressure inside the baking zone is lower than the ambient air pressure, which results in the above-mentioned draft of air into the tunnel oven via both the tunnel oven entrance and tunnel oven exit.

By controlling the pressure difference between the first air pressure in the pretreatment zone and the second air pressure in the baking zone, in particular near the transition between the pretreatment zone and the baking zone, by means of said pressure balancing unit, an airflow from the pretreatment zone into the baking zone can be controlled and/or regulated to create the desired condition in the pretreatment zone of the tunnel oven of the present invention. In particular, by controlling and/or regulating the airflow from the pretreatment zone into the baking zone, the airflow into the pretreatment zone via the tunnel oven entrance can substantially be reduced or even nullified.

It is noted that although the pressure balancing unit is configured for controlling a pressure difference between a first air pressure in the pretreatment zone and a second air pressure in the baking zone, this pressure difference is relatively small and difficult to measure. It is more easy to determine or to measure the airflow resulting from this pressure difference to provide a measure for said pressure difference.

It is further noted that it may be advantageous for some specific bread recipes, that a small amount of steam from the pretreatment zone enters into the baking zone. For such bread products, the pressure difference between the first pressure in the pretreatment zone and the second air pressure in the baking zone, and thus the airflow from the pretreatment zone into the baking zone, should not be nullified. However, the inventors found that it is advantageous for most bread recipes, that the steam pretreatment starts as soon as possible at the beginning of the pretreatment zone, close to the tunnel oven entrance.

This can be obtained by said pressure balancing unit which is configured for substantially reducing or nullifying an airflow into the pretreatment zone via the tunnel oven entrance, and thereby reducing and preferably avoiding a disturbance of the pretreatment zone, in particular at the part of the pretreatment zone near the tunnel oven entrance.

In addition, the conditions in the pretreatment zone can be better controlled due the reduced airflow into the pretreatment chamber. For example, a temperature and/or humidity at least at the entrance of the pretreatment zone will be better controllable and can be optimized so that the pretreatment starts as soon as possible at the beginning of the pretreatment zone to create an improved baking process, which may for example lead to an increase in the quality, homogeneity and/or desired appearance of the prepared food products.

The inventors found at least three different ways that a pressure balancing unit can operate:
1. the pressure balancing unit is configured to reduce the air pressure at the entrance of the tunnel oven;
2. the pressure balancing unit is configured to provide a desired pressure drop over the pretreatment zone; and/or
3. the pressure balancing unit is configured to increase the air pressure at the beginning of the baking zone.

In an embodiment, the pressure balancing unit comprises an air extraction unit comprising an air extraction inlet configured for extracting air from a region at or near the tunnel oven entrance, wherein the air extraction inlet is positioned at a side of the pretreatment zone that is opposite to the baking zone. By extracting air in the region at or near the tunnel oven entrance, an air pressure in said region can be lowered. By adjusting a rate of the air extraction, the air pressure in said region, in particular at the entrance of the tunnel oven can be regulated. As a result, the pressure difference between the air pressure at the tunnel oven entrance and the second air pressure in the baking zone can be decreased to a desired level, and accordingly the pressure difference between the first air pressure in the pretreatment zone and the second air pressure in the baking zone can be decreased to said desired level. By providing a desired amount of air extraction by the air extraction unit, the air pressure at the entrance of the tunnel oven can be lowered to a level to substantially reduce or nullify an airflow into the pretreatment zone via the tunnel oven entrance, and thereby reducing and preferably avoiding a disturbance of the pretreatment zone, in particular at the part of the pretreatment zone near the tunnel oven entrance.

In an embodiment, the air extraction inlet extends substantially along an entire width of the tunnel oven entrance, preferably wherein the air extraction inlet extend at least along the entire width of the tunnel oven entrance. Alternatively, the air extraction unit comprises multiple inlets, wherein said multiple inlets are distributed along the width of the tunnel oven entrance. By ensuring that the air extraction inlet covers all or at least a majority of the tunnel entrance, a substantially continuous 'curtain' of lower pressure is created along the width of the tunnel oven entrance. Accordingly, the air pressure at the entrance of the tunnel oven can be lowered over substantially the entire width of the tunnel oven entrance to a level for substantially reducing or nullifying the airflow into the pretreatment zone via the tunnel oven entrance, and thereby reducing and preferably avoiding a disturbance of the pretreatment zone over substantially the entire width of the tunnel oven, in particular at the part of the pretreatment zone near the tunnel oven entrance.

In an embodiment, the air extraction unit comprises an air suction unit and an air extraction unit exhaust, wherein the air suction unit is configured for actively transporting air between the air extraction inlet and the air extraction unit exhaust. As a result, the extraction of air by the air extraction unit through the air extraction inlet can be actively regulated and adjusted by adjusting a suction rate of the air suction unit.

It is noted, that the air extraction can also be provided by the natural draft obtained when the air extraction unit exhaust comprises or is connected to a chimney. In such a situation, the extraction of the air can be regulated by arranging a valve in the air extraction unit exhaust or in the chimney. However, using an air suction unit provides a more controllable suction rate, substantially independent from and not limited by a natural draft of a chimney.

In an embodiment, the pretreatment zone comprises a first sensor configured to provide a first signal, wherein the first signal provides a measure for a dew point, temperature, humidity, air pressure and/or air flowrate in the pretreatment zone. The incorporation of the first sensor provides insight into the conditions present in the pretreatment zone, and into the influence of the air extraction unit, in particular the air extraction rate thereof, on the conditions present in the pretreatment zone. Accordingly, the first sensor can be used to control the tunnel oven of the invention. In addition, the first sensor can also provide insight into the influence of an injection or rate of injection of pretreatment agent into the pretreatment zone and/or allows to optimize the conditions in the pretreatment zone in order to obtain food products with a desired quality and/or appearance.

In an embodiment, the air extraction unit comprises a second sensor configured to provide a second signal, wherein the second signal provides a measure for a temperature, humidity, air pressure and/or air flowrate in the air extraction unit. The incorporation of the second sensor provides insight into the conditions present in the extraction unit. Accordingly, the second sensor can also be used to control the tunnel oven of the invention. For example, when the air extraction unit is configured or controlled such that the air pressure at the entrance of the tunnel oven is substantially equal to the second air pressure in the baking zone, an air flow through the pretreatment zone is very low and difficult to measure and/or the regulate accurately. If however, the air extraction unit is configured or controlled such that the air pressure at the entrance of the tunnel oven is a little lower than the first air pressure in the pretreatment zone, this results in a small air flow out of the pretreatment zone at the side of the air extraction unit. This small air flow out of the pretreatment zone will carry an amount of pretreatment agent along, which can be detected by the second sensor in the air extraction unit. Accordingly, the second sensor in the air extraction unit can be used as a highly sensitive measuring device to determine when the air pressure at the entrance of the tunnel oven is becoming lower than the first air pressure in the pretreatment zone and/or than the second air pressure in the baking zone.

In an embodiment, the air extraction unit further comprises a first control unit connected to the suction unit, the first sensor, and/or the second sensor, wherein the first control unit is configured to control a speed and/or a capacity of the suction unit based on the first signal and/or the second signal. This allows the first control unit to be configured to automatically regulate the rate of air extraction by the air extraction unit, thus providing an automated control of the pressure difference between the air pressure at the tunnel oven entrance and the air pressure in the pretreatment zone and/or the baking zone.

In an embodiment, the air extraction unit further comprises a first flow control device, wherein the first flow control device is connected to the first control unit, wherein the first flow control device is configured for controlling an airflow through the air extraction unit based on a control signal from the first control unit. In an embodiment, the first flow control device comprises an valve, preferably an electrically, hydraulically or pneumatically controllable valve. Accordingly, the first control unit can regulate the rate of air extraction by the air extraction unit by controlling the first flow control device. Furthermore, the presence of the first flow control device allows the air extraction rate to be regulated independently in a case wherein the air extraction unit exhaust is shared with another component of the tunnel oven, such as the air exhaust of the baking zone.

In an embodiment, the air extraction inlet of the air extraction unit comprises at least one baffle, spaced apart from inner transverse walls of the air extraction inlet wherein the transverse walls of the air extraction inlet and the at least one baffle extends in a direction substantially parallel to the width direction of the tunnel oven entrance. Accordingly, the air extraction inlet is provided with a two or more air extraction inlet sections separated by said at least one baffle, which sections are arranged adjacent to each other in a direction towards the tunnel oven entrance. By providing said two or more air extraction inlet sections, a more homogeneous and a more controllable lowering of the air pressure at the tunnel oven entrance can be obtained, at least when the tunnel oven is in use.

In an embodiment of the invention, the pressure balancing unit comprises an air resistance inducing unit comprising a tunnel section which is mounted in a substantially air-tight manner to the tunnel oven entrance and wherein the tunnel section comprises the top wall and two side walls, wherein the two side walls are arranged adjacent to opposite lateral sides of a part of the transport device in front of the tunnel oven entrance and wherein the top wall is arranged above said part of the transport device, wherein the tunnel section comprises a plurality of baffles which are arranged inside said tunnel section, wherein said plurality of baffles are arranged spaced apart in a direction towards the tunnel oven entrance, wherein one or more of said baffles are connected to said top wall, and wherein said baffles extend from the top wall towards said part of the transport device. Accordingly, the air resistance inducing unit is configured to provide a resistance against air flow from the external environment through the tunnel section. The air resistance inducing unit provides a static or passive example of the pressure balancing unit of the present invention, wherein no additional moving or active elements are required to decrease a flow of external air through the tunnel section and into the tunnel entrance. This is at least partially achieved by the generation of turbulence in the incoming air and/or by providing a physical barrier, which results in an increased resistance against the flow of air through the tunnel section, which in turn leads to a reduction in the pressure difference over the tunnel section, and thus to a reduced air pressure at the side of the tunnel section that is facing towards the tunnel oven entrance and thus to a reduced air pressure at the entrance of the pretreatment zone. By providing a reduced air pressure at the entrance of the pretreatment zone, the pressure difference between the first air pressure in the pretreatment zone and the second air pressure in the baking zone by means of said pressure balancing unit, in particular near the transition between the pretreatment zone and the baking zone, is reduced and an airflow from the tunnel section into the pretreatment zone and subsequently into the baking zone can substantially be reduced or even nullified.

In an embodiment, said one or more baffles are connected to the top wall with a proximal end thereof, wherein a distal end of said one or more baffles, opposite to the proximal end, is arranged near to an upper side of said part of the transport device, wherein a distance between the upper side of said part of the transport device and the distal end of the one or more baffles is in a range of 80 - 140 mm. Preferably, the distance between the upper side of said part of the transport device and the distal end of the one or more baffles is large enough to allow an un-obstructed passage of the dough products and/or the holders for the dough products, such as baking tins. Preferably wherein said distance is configured such that a gap between the distal end of the one or more baffles and the upper side of said dough product and/or the upper side of said holders for the dough product, is in a range of 10 - 50 mm. Due to the relatively small distance between side of the dough products and/or the holders for the dough products facing away from said part of the transport device and the distal end of the one or more baffles, the generation and/or effectivity of turbulence in the incoming air is enhanced, which results in an enhanced resistance against the flow of air through the tunnel section, at least along the upper side of said part of the transport device with the dough products and/or the holders for the dough products arranged on said part of the transport device.

In an embodiment, one or both of said side walls are also provided with one or more baffles, wherein said one or more baffles are connected to the side wall with a proximal end thereof, wherein a distal end of said one or more baffles, opposite to the proximal end, is arranged near to a lateral side of said part of the transport device, wherein a distance between the lateral side of said part of the transport device and the distal end of the one or more baffles is in a range of 10 - 50 mm. Due to the relatively small distance between the lateral side of said part of the transport device and the distal end of the one or more baffles, the generation and/or effectivity of turbulence in the incoming air is enhanced, which results in an enhanced resistance against the flow of air through the tunnel section, at least along the lateral side of said part of the transport device.

It is noted that the embodiments of the air resistance inducing unit as described above, is particularly suitable for use with a transport device with a substantially closed conveying surface. In case the transport device does not comprise a substantially closed conveying surface, it is advantageous that the tunnel section of the air resistance inducing unit, in an embodiment thereof, further comprises a bottom wall, wherein said bottom wall is arranged under said part of the transport device. In this embodiment, the tunnel section is formed by the bottom wall, the top wall and the two side walls.

In an embodiment, said bottom wall is provided with one or more baffles, wherein said one or more baffles are connected to the bottom wall with a proximal end thereof, wherein a distal end of said one or more baffles, opposite to the proximal end, is arranged near to a bottom side of said part of the transport device, wherein a distance between the bottom side of said part of the transport device and the distal end of the one or more baffles is in a range of 10 - 50 mm. Due to the relatively small distance between the bottom side of said part of the transport device and the distal end of the one or more baffles, the generation and/or effectivity of turbulence in the incoming air is enhanced, which results in an enhanced resistance against the flow of air through the tunnel section, at least along the bottom side of said part of the transport device.

Preferably, in an embodiment, the bottom wall, the top wall and the two side walls of the tunnel section are all provided with one or more baffles.

In addition or alternatively, in an embodiment, the tunnel oven comprises
horizontally adjustable partition walls for adjusting a width of the tunnel oven entrance and/or vertically adjustable partition walls for adjusting a height of the tunnel oven entrance, and/or
horizontally adjustable partition walls for adjusting a width of the transition between the pretreatment zone and the baking zone and/or vertically adjustable partition walls for adjusting a height of the transition between the pretreatment zone and the baking zone,
wherein said width and height are arranged in a plane substantially perpendicular to a transport direction of the transport device. These adjustable partition walls allow to adjust the opening at the tunnel oven entrance and/or at the transition between the pretreatment zone and the baking zone, which opening(s) is(are) traversed by the transport device, in order to adjust said opening(s) in order to minimize a free space between the transport device with the dough products and/or the holders for the dough products. The adjustable partition walls allow to provide an air resistance at the tunnel oven entrance and/or at the transition between the pretreatment zone and the baking zone, and to reduced and an airflow through said opening(s).

The pretreatment zone comprises a bottom wall, the top wall and two side walls which surround a part of the transport device that is configured for transporting the food products through the pretreatment zone of the tunnel oven. In addition or alternatively, in an embodiment of the invention, said pressure balancing unit comprises a plurality of baffles arranged inside said pretreatment zone, wherein said plurality of baffles are arranged spaced apart in a direction away from the oven entrance and towards the baking zone, wherein one or more of said baffles are connected to said top wall, and wherein said baffles extend from the top wall towards said part of the transport device. Accordingly, the baffles in the pretreatment zone provide a resistance against air flow from the tunnel oven entrance towards the baking section. The baffles inside the pretreatment zone also provide a static or passive example of the pressure balancing unit of the present invention, wherein no additional moving or active elements are required to decrease a flow of external air from the tunnel entrance towards the baking zone. This is at least partially achieved by the generation of turbulence in the incoming air, which results in an increased resistance against the flow of air through the pretreatment zone, which in turn leads to a reduction in the pressure difference over the pretreatment zone, and thus to a reduced air pressure at the side of the pretreatment zone adjacent to the baking zone. By providing a reduced air pressure in the pretreatment zone near to the baking zone, the pressure difference between the first air pressure in the pretreatment zone and the second air pressure in the baking zone by means of said pressure balancing unit, in particular near the transition between the pretreatment zone and the baking zone, is reduced and an airflow from the pretreatment zone and subsequently into the baking zone can substantially be reduced or even nullified.

In an embodiment, said one or more baffles are connected to the top wall with a proximal end thereof, wherein a distal end of said one or more baffles, opposite to the proximal end, is arranged near to an upper side of said part of the transport device, wherein a distance between the upper side of said part of the transport device and the distal end of the one or more baffles is in a range of 80 - 140 mm. Preferably, the distance between the upper side of said part of the transport device and the distal end of the one or more baffles is large enough to allow an un-obstructed passage of the dough products and/or the holders for the dough products, such as baking tins. Preferably wherein said distance is configured such that a gap between the distal end of the one or more baffles and the upper side of said dough product and/or the upper side of said holders for the dough product, is in a range of 10 - 50 mm. Due to the relatively small distance between side of the dough products and/or the holders for the dough products facing away from said part of the transport device and the distal end of the one or more baffles, the generation and/or effectivity of turbulence in the incoming air is enhanced, which results in an enhanced resistance against the flow of air through the pretreatment zone, at least along the upper side of said part of the transport device with the dough products and/or the holders for the dough products arranged on said part of the transport device.

In an embodiment, one or both of said side walls are also provided with one or more baffles, wherein said one or more baffles are connected to the side wall with a proximal end thereof, wherein a distal end of said one or more baffles, opposite to the proximal end, is arranged near to a lateral side of said part of the transport device, wherein a distance between the lateral side of said part of the transport device and the distal end of the one or more baffles is in a range of 10 - 50 mm. Due to the relatively small distance between the lateral side of said part of the transport device and the distal end of the one or more baffles, the generation and/or effectivity of turbulence in the incoming air is enhanced, which results in an enhanced resistance against the flow of air through the pretreatment zone, at least along the lateral side of said part of the transport device.

In an embodiment, said bottom wall is provided with one or more baffles, wherein said one or more baffles are connected to the bottom wall with a proximal end thereof, wherein a distal end of said one or more baffles, opposite to the proximal end, is arranged near to a bottom side of said part of the transport device, wherein a distance between the bottom side of said part of the transport device and the distal end of the one or more baffles is in a range of 10 - 50 mm. Due to the relatively small distance between the bottom side of said part of the transport device and the distal end of the one or more baffles, the generation and/or effectivity of turbulence in the incoming air is enhanced, which results in an enhanced resistance against the flow of air through the pretreatment zone, at least along the bottom side of said part of the transport device.

Preferably, in an embodiment, the bottom wall, the top wall and the two side walls of the pretreatment zone are all provided with one or more baffles.

In addition or alternatively, in an embodiment, the pretreatment zone comprises a bottom wall, the top wall and two side walls which surround a part of the transport device that is configured for transporting the food products through the pretreatment zone of the tunnel oven, wherein said pressure balancing unit comprises a plurality of curtains arranged inside said pretreatment zone, wherein said plurality of curtains are arranged spaced apart in a direction away from the oven entrance and towards the baking zone, preferably wherein one or more of said plurality of curtains are connected to said top wall, and wherein said one or more of said plurality of curtains extend from the top wall towards said part of the transport device. Accordingly, the plurality of curtains in the pretreatment zone provide a resistance against air flow from the tunnel oven entrance towards the baking section, in a similar manner as the baffles in the previously described embodiments. The plurality of curtains inside the pretreatment zone also provide a static or passive example of the pressure balancing unit of the present invention, wherein no additional moving or active elements are required to decrease a flow of external air from the tunnel entrance towards the baking zone. The plurality of curtains are made from a flexible and/or pliable material. When a food product and/or a holder for a food product, such as a baking tray, would inadvertently collide with one of the plurality of curtains, said curtain can flex or bend out of the way to allow the food product and/or the holder for a food product to pass along. Accordingly, by using a plurality of curtains in the pretreatment zone as a pressure balancing unit, a congestion or blocking of the tunnel oven due to an inadvertent collision and any downtime for removing the congestion in the tunnel oven, can substantially be avoided. The flexible and/or pliable curtains also allow to configure the curtains such that an edge of said plurality of curtains facing towards the transport device, in use, is much closer to the food product and/or the holder for a food product, at least when compared to substantially rigid baffles. The smaller gap between the edge of the curtains and the food product and/or holder for the food product can provide an increased resistance against air flow from the tunnel oven entrance towards the baking section.

In an embodiment, one or more of said plurality of curtains are extend in a direction substantially parallel to the width direction of the tunnel oven entrance and/or in a direction substantially perpendicular to a transport direction of the transport device, in particular the transport direction of the transport device at or near the position of said one or more curtains. Accordingly, said one or more of said plurality of curtains extend in a direction substantially perpendicular to an air flow from the tunnel oven entrance towards the baking section to provide a substantial equal resistance against air flow over the width of the tunnel oven.

In an embodiment, each one of said plurality of curtains comprises a cut-out at the side facing away from the top wall, wherein the curtain part adjacent to said cut-out reaches to a position near or touching an upper side of the transport device. Due to the cut-out, the curtains can reach down to the upper side of the transport device at positions adjacent to the intended path of the food products and/or holders for food products traversing the tunnel oven, which, in use, can substantially block an air flow in between and/or adjacent to the food products and/or holders for food products to a large extend. Accordingly, the parts of the plurality of curtains between or adjacent to the cut-outs provide an increased resistance against air flow from the tunnel oven entrance towards the baking section.

In an embodiment, said cut-out in each one of said plurality of curtains is configured to allow a substantially un-obstructed passage of the dough products and/or the holders for the dough products, such as baking tins, or wherein said cut-out is configured such that a gap between an edge the one or more of said plurality of curtains in the cut-out and the upper side of said transport device is in a range of 80 - 140 mm. In particular, the distance between the upper side of said part of the transport device and the distal end of the one or more curtains is chosen to be large enough to allow an un-obstructed passage of the dough products and/or the holders for the dough products, such as baking tins.

In an embodiment, one or more of said plurality of curtains is/are movable in a direction towards and away from an upper side of the transport device. By moving one or more of said plurality of curtains towards or away from the upper side of the transport device, a distance between the lower edge of the curtains facing the transport device and the upper side of the transport device, can be adjusted to the height of the food products and/or holders of food products that are intended to be processed in the tunnel oven. This allows to optimize the resistance against air flow from the tunnel oven entrance towards the baking section.

In an embodiment, one or more of said plurality of curtains comprises multiple strips which are arranged adjacently in a direction substantially parallel to the width direction of the tunnel oven. In an embodiment, a width of two or more strips of said multiple strips is substantially the same in the direction substantially parallel to the width direction of the tunnel oven. The multiple strips that are arranged adjacently in the direction substantially parallel to the width direction of the tunnel oven together provide a substantially closed curtain surface to provide the resistance against air flow. In addition, the multiple strips can more easily move out of the way of objects on the transport device, and only opens to the size of the object on the transport device. Where there is no object on the transport device, the strips stay in their original position to provide a substantially closed surface to maintain the resistance against air flow.

In an embodiment, one or more of said plurality of curtains comprises a series of cuts which extend in a substantially vertical direction and wherein said cuts are arranged spaced apart in a direction substantially parallel to the width direction of the tunnel oven. In an embodiment, a distance between adjacent cuts of said series of cuts in the a direction substantially parallel to the width direction of the tunnel oven, is substantially the same. The series of cuts are at least provided at the side of the curtain that faces the transport device. The series of cuts divides at least the part of the curtain adjacent to the transport device in a series of strips of curtain between adjacent cuts, which strips provide substantially the same advantages as discussed in relation to the previous embodiment.

In an embodiment, the bottom wall of the pretreatment zone is provided with one or more baffles, wherein said one or more baffles are connected to the bottom wall with a proximal end thereof, wherein a distal end of said one or more baffles, opposite to the proximal end, is arranged near to a bottom side of said part of the transport device, wherein a distance between the bottom side of said part of the transport device and the distal end of the one or more baffles is in a range of 10 - 50 mm. Due to the relatively small distance between the bottom side of said part of the transport device and the distal end of the one or more baffles, the generation and/or effectivity of turbulence in the incoming air is enhanced, which results in an enhanced resistance against the flow of air through the pretreatment zone, at least along the bottom side of said part of the transport device.

According to the invention, the baking zone comprises a bottom wall, a top wall and two side walls which surround a part of the transport device that is configured for transporting the food products through the baking zone of the tunnel oven. In addition or alternatively, in an embodiment of the invention, said pressure balancing unit comprises a plurality of baffles arranged inside said baking zone, wherein said plurality of baffles are arranged between the pretreatment zone and the air exhaust and are arranged spaced apart in a direction away from the oven entrance and towards the oven exit, and wherein said baffles extend in a direction substantially parallel to the width direction of the tunnel oven entrance and in a direction from the top wall towards said part of the transport device. Accordingly, the baffles in the baking zone provide a resistance against air flow from the tunnel oven entrance towards the air exhaust. The baffles inside the baking zone also provide a static or passive example of the pressure balancing unit of the present invention, wherein no additional moving or active elements are required to decrease a flow of external air from the tunnel entrance towards the air exhaust. This is at least partially achieved by the generation of turbulence in the incoming air, which results in an increased resistance against the flow of air in the part of the baking zone between the pretreatment zone and the air exhaust, which in turn leads to a reduction in the pressure difference over the pretreatment zone, and an airflow from the pretreatment zone and subsequently into the baking zone can substantially be reduced or even nullified.

It is noted that instead of baffles, curtains may also be applied in a similar manner as described above with respect to the pretreatment zone. However, the curtains used must be made from a heat-resistant material.

In an embodiment, the baking zone comprises a heating element which is arranged in a plane parallel to and above a part of the transport device, wherein said one or more baffles are connected to the heating element with a proximal end thereof, wherein a distal end of said one or more baffles, opposite to the proximal end, is arranged facing an upper side of said part of the transport device. In addition to its function as a pressure balancing unit, the one or more baffles of this embodiment also act as reinforcement for the heating element, in particular when the heating element comprises elongated tubes or plates provided with ducts, such as a heating plate, which tubes or ducts provide passages for passing there through a heating medium, particularly oil. The heating element in the oven are configured for heating the food products by means of radiation and optionally convection.

In an embodiment, the one or more baffles which are connected to the heating element are made from a heat conducting material, preferably a metal. Accordingly, the baffles can also provide, in use, an increased heat transfer from the heating element to the food products.

In an embodiment, a distance between the upper side of said part of the transport device and the distal end of the one or more baffles is in a range of 80 - 140 mm. In particular, the distance between the upper side of said part of the transport device and the distal end of the one or more baffles is chosen to be large enough to allow an un-obstructed passage of the dough products and/or the holders for the dough products, such as baking tins.

In an alternative embodiment, for the one or more baffles which are not connected to a heating element, said one or more baffles are connected to the top wall with a proximal end thereof, wherein a distal end of said one or more baffles, opposite to the proximal end, is arranged facing an upper side of said part of the transport device, preferably wherein a distance between the upper side of said part of the transport device and the distal end of the one or more baffles is in a range of 80 - 140 mm. In particular, the distance between the upper side of said part of the transport device and the distal end of the one or more baffles is chosen to be large enough to allow an un-obstructed passage of the dough products and/or the holders for the dough products, such as baking tins.

In an embodiment, the distance between the upper side of said part of the transport device and the distal end of the one or more baffles is configured to allow an un-obstructed passage of the dough products and/or the holders for the dough products, such as baking tins, preferably wherein said distance is configured such that a gap between the distal end of the one or more baffles and the upper side of said dough product and/or the upper side of said holders for the dough product, is in a range of 10 - 50 mm.

In an embodiment, one or both of said side walls are also provided with one or more baffles, wherein said one or more baffles are connected to the side wall with a proximal end thereof, wherein a distal end of said one or more baffles, opposite to the proximal end, is arranged facing a lateral side of said part of the transport device, preferably wherein a distance between the lateral side of said part of the transport device and the distal end of the one or more baffles is in a range of 10 - 50 mm.

In an embodiment, the pressure balancing unit comprises an air resistance inducing unit, or an embodiment thereof, as described above, and an air extraction unit, or an embodiment thereof, as described above, wherein the air resistance inducing unit and the air extraction unit are arranged in series in front of the tunnel oven entrance.

In addition or alternatively, in an embodiment, the pressure balancing unit comprises an air supply unit comprising an air supply inlet which is arranged at or near the transition between the pretreatment zone and the baking zone, wherein the air supply unit is configured for providing air substantially into:
the transition between the pretreatment zone and the baking zone, or
the baking zone, at least near the transition between the pretreatment zone and the baking zone.

By introducing air in the region at or near the transition between the pretreatment zone and the baking zone, an air pressure in said region can be increased. As a result, the reduction of the air pressure inside the baking zone due to the extraction of air from the baking zone, when the tunnel oven is in use, can at least at the transition between the pretreatment zone and the baking zone partially be compensated by the air supply unit. Accordingly, the air supply unit allows to reduce a difference between the air pressure at the tunnel oven entrance and the air pressure at the transition between the pretreatment zone and the baking zone, which results in a reduction of a draft of air through the pretreatment zone and, accordingly, in a reduction or avoidance of a disturbance of the atmosphere in the pretreatment zone.

In an embodiment, the air supply inlet is arranged to debouch in the baking zone at a position near the transition between the pretreatment zone and the baking zone. By arranging the air supply inlet in the baking zone, said air supplied does substantially not disturb the pretreatment process in the pretreatment zone. In addition, by providing air, such as fresh or dry air, into the baking zone, the moisture content of the air in the baking zone adjacent to the air supply inlet can at least partially be regulated.

In an embodiment, the air supply unit comprises multiple air supply inlets, wherein said multiple air supply inlets are arranged in series in the baking zone in a direction from the transition between the pretreatment zone to the tunnel oven exit. Preferably, one or more of said multiple air supply inlets are providing with a flow control device which is configured for controlling an air flow through a corresponding air supply inlet. Preferably, the flow control device comprises an valve, preferably an electrically, hydraulically or pneumatically controllable valve. By controlling an inflow of fresh or dry air into the baking zone at various positions along the longitudinal direction of the tunnel oven, the moisture content of the air in the baking zone at various positions in the baking zone along the longitudinal direction of the tunnel oven can at least partially be regulated, in order to provide a desired humidity profile in the baking zone as a function of the position along the longitudinal direction of the tunnel oven.

In an embodiment, the air supply unit comprises a blower, wherein said blower is arranged in fluid connection with the one or more air supply inlets. The blower allows to actively blow air via the one or more air supply inlets into the tunnel oven, in particular at or near the transition between the pretreatment zone and the baking zone or into the baking zone. The blower is preferably configured for adjusting the flow rate of air. By regulating the flow rate of the air through the air supply inlet, the air pressure in said region at or near the transition between the pretreatment zone and the baking zone, can be regulated.

In an embodiment, the one or more air supply inlets are connected to the air exhaust. This embodiment is in particular useful in case it is desired to introduce warm and/or humid air via the one or more air supply inlets into the baking zone. Accordingly, this embodiment allows to use the warm and/or humid air extracted from the end of the baking zone by the air exhaust to at least partially be recycled back into the transition between the pretreatment zone and the baking zone through the one or more air supply inlets.

In an embodiment, the baking zone comprises a steam-injector for providing steam to the baking zone, wherein the steam-injector is positioned at or near the transition between the pretreatment zone and the baking zone or in the baking zone. A supply of steam can also be used to increase the air pressure in said baking zone near the pretreatment zone, and as such can reduce the pressure difference between the first air pressure in the pretreatment zone and the second air pressure in the baking zone in order to reduce an airflow from the pretreatment zone into the baking zone, which in turn allows to reduce a disturbance of the pretreatment zone. In addition, the steam-injector can be used to adjust the humidity in the baking zone, which may improve the quality and homogeneity of the prepared food products. Furthermore, in case said one or more air supply inlets are provided, the supply of steam near one or more of said one or more air supply inlets may act to condition the supplied air such that for example a lack in humidity does not disturb the conditions in the baking zone.

In an embodiment, the pretreatment zone further comprises a third sensor configured to provide a third signal, wherein the baking zone further comprises a fourth sensor configured to provide a fourth signal, wherein the third signal and the fourth signal each correspond to a temperature, humidity, air pressure and/or air flowrate in the pretreatment zone and the baking zone respectively. The incorporation of the two sensors in the baking chamber and the pretreatment chamber provides the tunnel oven operator with insight into the conditions present in the two chambers of the tunnel oven.

In an embodiment, the air supply unit comprises a second control unit connected to the third sensor and the fourth sensor, wherein the second control unit is configured for adjusting or regulating the air supplied via the one or more air supply inlets based on the third and/or fourth signal. This allows or to adjust parameters of the air supply unit, such as an air supply rate, the temperature or humidity of the supplied air, in order to further optimize the baking process and/or to enhance the quality of the produced food products.

In an embodiment, the second control unit is further connected to the blower of the air supply unit and/or to said one or more flow control devices associated with said one or more air supply inlets, wherein the second control unit is configured to control flow of air into the baking zone via said one or more air supply inlets based on the third signal and/or the fourth signal. Accordingly, the second control unit is configured to regulate the rate of the air injected at or near the transition between the pretreatment zone and the baking zone, thus providing an automated control, and preferably a minimization, of a difference between the air pressure at tunnel oven entrance and the air pressure at or near the transition between the pretreatment zone and the baking zone.

In an embodiment, the second control unit is further connected to the steam-injector, wherein the second control unit is configured to control a rate of steam supply based on the third signal and/or fourth signal. As a result, a rate of steam supply by the steam-injector may be regulated by the second control unit to for example ensure that the humidity in the baking zone is at a desired level independent of the rate at which air is injected into the baking zone.

It is noted that, in an embodiment, two or more of the air supply unit, the air extraction unit, the air resistance inducing unit and the baffles in the pretreatment zone, as described above, can be combined in order to the decrease the pressure difference between the first air pressure on the pretreatment zone and the second air pressure in the baking zone, in particular to a desired level.

In an embodiment, the air extraction unit exhaust of the air extraction unit is connected to the one or more air supply inlets of the air supply unit. This embodiment allows to extract air at the tunnel oven entrance and to supply said extracted air to the one or more air supply inlets in the baking zone. This provides an easy and/or alternative way to at least reduce a pressure difference between the air pressure at the tunnel oven entrance and the air pressure in the baking zone, in particular at or near the transition between the pretreatment zone and the baking zone. Thus this embodiment provides a path for at least a part of the air that would otherwise flow through the pretreatment zone due to the draft in the tunnel oven, and thereby can at least reduce and preferably avoid a disturbance of the pretreatment zone. Preferably, this embodiment is also provided with the baffles in the pretreatment zone in order to increase the air resistance for an air flow through the pretreatment zone.

In an embodiment, the air exhaust for extracting air from the baking zone is arranged spaced apart from the pretreatment zone, preferably spaced apart over a distance equal or greater than 20% of the total length of the baking zone, more preferably equal or greater than 30% of the total length of the baking zone.

According to a second aspect, the invention provides a method for preparing food products in a tunnel oven, or an embodiment thereof, as described above, wherein the method comprises the step of:
- controlling a pressure difference between a first air pressure in the pretreatment zone and a second air pressure in the baking zone, using said pressure balancing unit in order to substantially reduce or nullify an airflow into the pretreatment zone via the tunnel oven entrance.

In an embodiment wherein the pressure balancing unit comprises an air extraction unit or an embodiment thereof as described above, the step of controlling the pressure difference comprises the step of: extracting air at a first air extraction rate from the region at or near the tunnel oven entrance.

In an embodiment, the method further comprises the following steps:
- determining a temperature, humidity, air pressure and/or air flowrate in the pretreatment zone and/or the air extraction unit;
- setting the first air extraction rate based on the determination of the temperature, humidity, air pressure and/or air flowrate in the pretreatment chamber and/or the air extraction unit.

In an embodiment wherein the pressure balancing unit comprises an air supply unit or an embodiment thereof as described above, the step of controlling the pressure difference comprises the step of: supplying air at a first air supply rate through the first air supply inlet at or near the transition between the pretreatment zone and the baking zone.

In an embodiment, the method further comprises the following steps:
- determining a temperature, humidity, air pressure and/or air flowrate in the pretreatment zone and/or the baking zone;
- setting the first air supply rate based on the determination of the temperature, humidity, air pressure and/or air flowrate in the pretreatment zone and/or the baking zone.

In an embodiment, the method further comprises the step of: providing steam to the baking zone at a first steam addition rate, wherein the first steam addition rate is determined based on the temperature and/or humidity in the baking zone.

The various aspects and features described and shown in the specification can be applied, individually, wherever possible. These individual aspects, in particular the aspects and features described in the attached dependent claims, can be made subject of divisional patent applications.

### BRIEF DESCRIPTION OF THE DRAWINGS

The invention will be elucidated on the basis of an exemplary embodiment shown in the attached drawings, in which:
Figure 1A shows a schematic cross-section in a longitudinal direction of a tunnel oven;
Figure 1B shows schematically the development of the dewpoint along a longitudinal direction of the tunnel oven of figure 1A;
Figure 2 shows a schematic cross-section of a tunnel oven with a first example of a pressure balancing unit in the form of an air extraction unit positioned in front of a tunnel oven;
Figure 3 shows a schematic cross-section of a tunnel oven with a second example of a pressure balancing unit in the form of an air resistance inducing unit connected to the tunnel oven entrance;
Figure 4 shows a schematic cross-section of a tunnel oven with a third example of the pressure balancing units which comprises an air resistance inducing unit and an air extraction unit arranged in series in front of the tunnel oven entrance;
Figure 5A shows a schematic cross-section of a tunnel oven with a fourth example of a pressure balancing unit in the form of an air resistance inducing unit arranged in the pre-treatment zone of the tunnel oven, comprising a plurality of substantially rigid baffles;
Figure 5B shows a schematic cross-section of a tunnel oven with a further fourth example of a pressure balancing unit in the form of an air resistance inducing unit arranged in the pre-treatment zone of the tunnel oven, comprising a plurality of curtains;
Figure 5C shows a schematic cross-section of the tunnel oven of figure 5B along the line VC-VC;
Figure 5D shows a schematic cross-section of the tunnel oven of figure 5B along the line VC-VC but with alternative examples of a curtain;
Figure 6 shows a schematic cross-section of a tunnel oven with a fifth example of a pressure balancing unit in the form of an air supply unit comprising an air supply inlet which is arranged at or near the transition between the pretreatment zone and the baking zone;
Figure 7A shows a schematic cross-section of a tunnel oven with a sixth example of a pressure balancing unit in the form of an air supply unit comprising multiple air supply inlets which debouch in the baking zone;
Figures 7B and 7C show schematically the development of the dewpoint along a longitudinal direction of the tunnel oven of figure 7A under different air supply arrangements;
Figure 8 shows a schematic cross-section of a tunnel oven with a seventh example of a pressure balancing unit in the form of an air resistance inducing unit arranged in the baking zone, in particular comprising a plurality of baffles attached to a heating element; and
Figure 9 shows a schematic cross-section of a tunnel oven with a eighth example of the pressure balancing units which comprises an air resistance inducing unit and an air extraction unit arranged in series in front of the tunnel oven entrance, an air resistance inducing unit arranged in the pre-treatment zone of the tunnel oven, and an air supply unit comprising multiple air supply inlets which debouch in the baking zone of the tunnel oven.

### DETAILED DESCRIPTION OF THE INVENTION

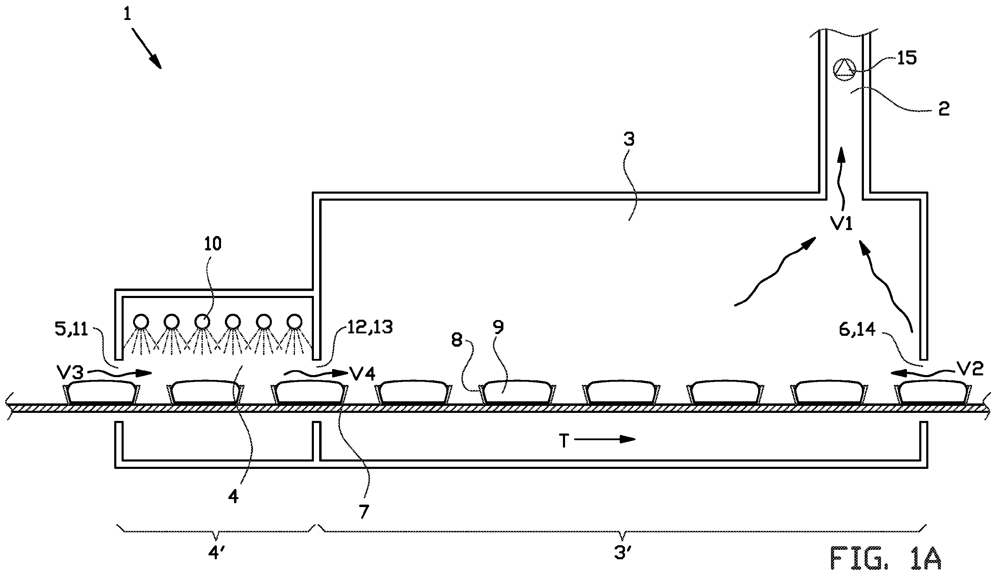

Figure 1A schematically shows an example of a typical tunnel oven 1 as known in the art. Said tunnel oven 1 comprises a tunnel oven entrance 5 and a tunnel oven exit 6.

Adjacent to the tunnel oven entrance, the tunnel oven 1 according to this example comprises a pretreatment chamber 4, wherein the pretreatment chamber 4 comprises a first entrance 11 and a first exit 12. The first entrance 11 is connected to, and in this case coincides, with the tunnel oven entrance 5. The first exit 12 connects to, and in this case coincides, with a second entrance 13 of a baking chamber 3. The pretreatment chamber 4 constitutes or forms a pretreatment zone 4', and the first exit 12 and the second entrance 13 constitute or form a transition between the pretreatment zone 4' and the baking zone 3'. The pretreatment chamber 4 further comprises a multitude of injectors 10 configured for injecting a pretreatment agent into the pretreatment chamber 4, preferably towards food products inside the pretreatment chamber 4.

The addition of a pretreatment agent to food products 9 before the food products 9 enter the baking chamber 3 may increase the quality of the food product 9 and/or may assist the baking process. In some cases the preparation of the food products 9 requires an addition of a pretreatment agent.

The most common pretreatment agent used in the baking process of bread is steam. For example, in the case of bread products, the addition of steam as the pretreatment agent may improve the texture of the crust of the final dough product. In the following we only discuss steam as the pretreatment agent. However, the pre-treatment agents are not limited to steam, and other pre-treatment agents can also be used in the tunnel oven of the present invention.

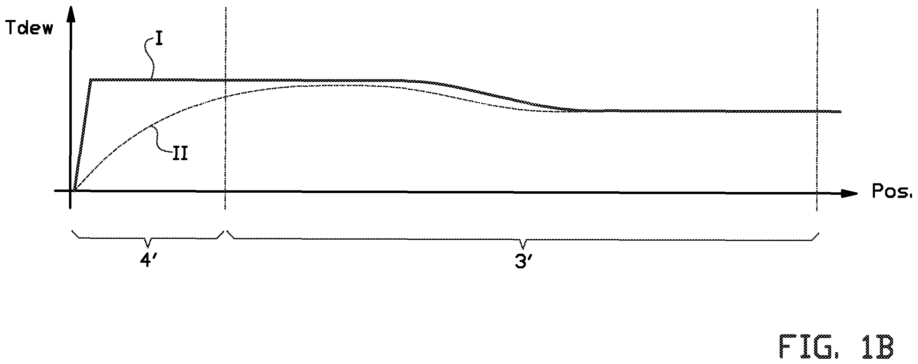

Adjacent to the pretreatment chamber 4, the tunnel oven 1 comprises a baking chamber 3 with a second entrance 13 and a second exit 14, wherein the second exit 14 connects to and in this example coincides with the tunnel exit 6. The baking chamber 3 constitutes or forms a baking zone. The baking chamber 3 further comprises an air exhaust 2 configured for extracting air from the baking chamber 3, at least when the tunnel oven is in use. The air exhaust 2 may comprise an exhauster 15 which commonly comprises an air fan or a blower, which allows a more active and controlled removal of air out of the baking chamber 3. It is noted that the air extraction via the air exhaust 2 may also be provided by the natural draft obtained when the air exhaust 2 is connected to a chimney. As schematically shown in figure 1, the air exhaust 2 is arranged at a position towards or close to the tunnel oven exit 6. The baking chamber 3 is preferably elongated and having a tunnel-like shape, wherein a length of the baking chamber 3 typically significantly exceeds a height/width of the baking chamber 3. The baking chamber 3, although not shown, will commonly comprise one or more heat sources for controlling and/or increasing a temperature in the baking chamber 3.

The tunnel oven as shown in Figure 1A further comprises a transport device 7 which is configured for transporting several baking trays 8 containing food products 9, in particular dough pieces for making bread, through the tunnel oven 1. The transport device 7 is configured for transporting the to be baked products along a transport direction T into the tunnel oven entrance 5, through the pretreatment chamber 4, through the baking chamber 3, and out of the tunnel oven exit 6. Preferably, the transport device 7 comprises a conveyer, preferably comprising a belt conveyor which comprises a heat resistant conveyor belt, which preferably has an open structure to allow air to pass through the conveyor belt.

Such a tunnel oven 1 can be used for baking and/or cooking food products 9 in an industrial setting, and allows to transport or convey the food products 9 in a substantially continuous manner through the tunnel oven 1, during which the food products 9 are subjected to heat in order to prepare said food products 9. As a result of the continuous operation of the tunnel oven 1, the tunnel entrance 5 and the tunnel exit 14 are kept continuously open during operation of the tunnel oven.

The air exhaust 2, as shown in figure 1A, is used to remove gasses from the baking chamber 3, in particular gasses that are produced for example by the heated food products. The removal of air V1 from the baking chamber 3 results in a reduction in the air pressure in the baking chamber 3 compared to an external ambient environment of the tunnel oven 1. This pressure difference results in a flow of air V2 from the external environment through the tunnel oven exit 6 into the baking chamber 3, and in a flow of air V3, V4 from the external environment through the tunnel oven entrance 5 and the pretreatment chamber 4 into the baking chamber 3.

This pressure difference and the corresponding flow V3, V4 of air through the pretreatment chamber 4 may lead to an uncontrolled environment and/or airflow in and through the pretreatment chamber 4. This uncontrolled nature can disturb the pretreatment process in the pretreatment chamber 4 and/or lead to a flow of the pretreatment agent into the baking chamber 3 of the tunnel oven 1.

For example, figure 1B schematically shows some examples of the development of the dewpoint T_{dew} as a function of the position Pos along a longitudinal direction of the tunnel oven 1 of figure 1A. For the baking of bread, it is desired to have a high dewpoint T_{dew} in the steam zone 4', and that the dewpoint T_{dew} reaches this high value close to the first entrance 5 of the steam zone 4'. So, a development of the dewpoint T_{dew} as shown in graph I of figure 1B is desired. However, due to the draft of ambient air, in particular the flow of air V3, V4, through the steam zone 4', the development of the dewpoint T_{dew} in known tunnel ovens is schematically shown in graph II in figure 1B.

In order to at least reduce and preferably avoid the uncontrolled air flow V3, V4 through the pretreatment chamber 4, in order to obtain a more controlled environment for the pretreatment of the food products 9 in the pretreatment chamber 4, the tunnel oven of the present invention comprises a pressure balancing unit. Several different examples of a tunnel oven with a pressure balancing unit are discussed below.

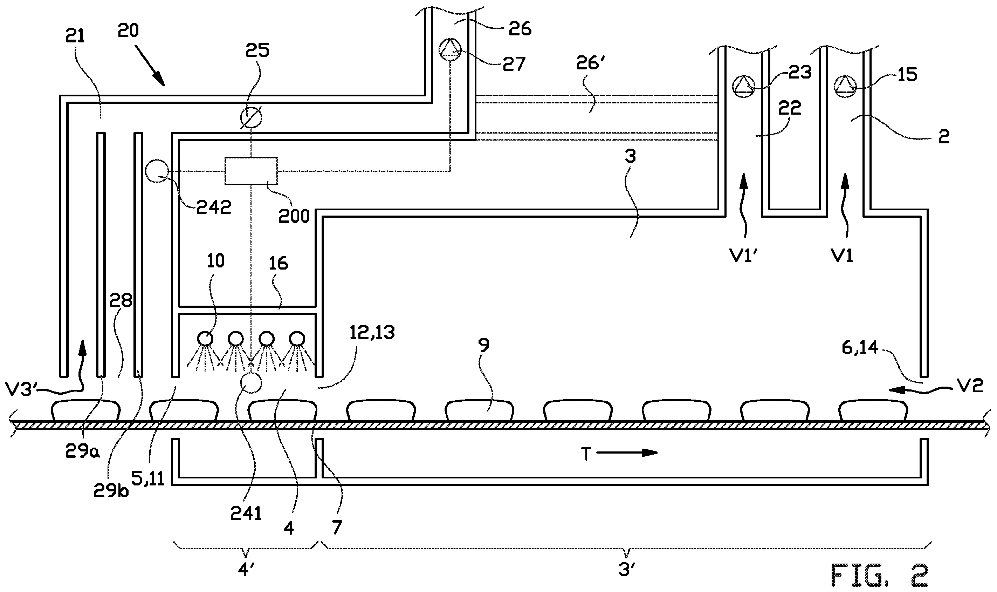

Figure 2 schematically shows an example of a tunnel oven 20 based on a tunnel oven design substantially similar as the tunnel oven 1 as shown in figure 1. Corresponding features of the tunnel oven 20 of this example with respect to the tunnel oven 1 of figure 1 are indicated with the same reference numerals.

The tunnel oven 20 of figure 2, comprises a tunnel oven entrance 5, a pretreatment chamber 4, a baking chamber 3 and a tunnel oven exit 6. In the example of figure 2, the air exhaust 2 is a first air exhaust, and the baking chamber 3 of this particular example further comprises a second air exhaust 22 configured for extracting air V1' from at least the baking chamber 3. The second air exhaust 22 is shown comprising a second exhauster 23.

The tunnel oven 20 is provided with a first example of a pressure balancing unit configured for at least reducing a pressure difference between a first air pressure in the pretreatment zone 4' and a second air pressure in the baking zone 3', in particular for reducing the air pressure at the entrance 5 of the tunnel oven 20 for substantially reducing or nullifying an airflow into the pretreatment zone 4' via the tunnel oven entrance 5. The pressure balancing unit comprises an air extraction unit 21 which is arranged in front of the tunnel oven entrance 5. The air extraction unit 21 comprises an air extraction inlet 28, which is positioned in front of the first entrance 11 of the pretreatment chamber 4 opposite from the baking chamber 3. The air extraction inlet 28 is configured for extracting or removing air from a region in front, at and/or near the first entrance 11 of the pretreatment chamber 4. This removal of air results in a lowered air pressure in the region in front of, and at the first entrance 11. And as a result, the pressure difference between the first entrance 11 and the first exit 12 is lowered. Accordingly, there is a reduced propensity for air to flow from the external environment through the first entrance 11 into the pretreatment chamber 4.

In the example of figure 2, the air extraction unit 21 is integrally formed with the housing 16 of the tunnel oven 20, and as such, the air extraction unit 21 is connected to the tunnel oven 20 in a substantially air-tight manner. In an alternative embodiment, the air extraction unit 21 can also be a separate unit which is connected to the tunnel oven entrance 5, preferably in an air-tight manner.

The air extraction inlet 28 typically spans or extends over substantially the whole width of the tunnel oven entrance 5. Furthermore, the air extraction inlet 28 of this example comprises a plurality of baffles 29a, 29b. The baffles 29a, 29b are spaced apart in a direction along a transport direction T of the transport device 7, and extend in a direction substantially perpendicularly to the transport direction T along the front of the tunnel oven entrance 5, substantially perpendicular to the plane of the cross-section of figure 2.

The air extraction unit 21 is connected directly to a third exhaust 26 comprising a third exhauster 27 for transporting air V3' away from the air extraction inlet 28. In addition or alternatively, the air extraction unit 21 may be connected to at least one of the air exhausts 2, 22 in the baking chamber 3 via a connecting pipe 26'. In the example of figure 2, the air extraction unit 21 is optionally connected to the second air exhaust 22, and the exhauster 23 is then configured for transporting air away from both the air extraction inlet 28 and the baking chamber 3.

Preferably, as schematically shown in figure 2, the pretreatment chamber 4 comprises a first sensor 241 and the air extraction unit 21 comprises a second sensor 242, wherein the first and second sensor 241, 242 are connected to a control unit 200. The first sensor 241 is configured to provide a first signal, and the second sensor 242 is configured to provide a second signal, wherein the first and second signals each corresponds to a temperature, humidity, air pressure and/or air flowrate in the pretreatment chamber 4 and the air extraction unit 21 respectively. The control unit 200 is connected to an air suction unit, in this example the air suction unit is the third exhauster 27, wherein the control unit 200 is configured for increasing or decreasing a speed or capacity of the exhauster 27 in dependence of the first and/or second signal. It is noted that in case the air extraction inlet 28 is connected to the second exhaust 22, the control unit 200 is preferably connected to the second exhauster 23, wherein the control unit 200 is preferably configured for increasing or decreasing a speed or capacity of the second exhauster 23 in dependence of the first and/or second signal.

Alternatively or additionally, the air extraction unit 21 comprises a flow control device 25, for example a valve, configured to control the rate of airflow through the third exhaust 26, 26' and thereby the rate of airflow from the air extraction inlet 28. The control unit 200 is then also connected to the flow control device 25, wherein the control unit 200 is configured to actuate or control the flow control device 25 in order to reduce or increase the airflow through the third exhaust 26, 26' in dependence of the first and/or second signal.

The control unit 200, either in combination with the third exhauster 27, the second exhauster 23, or the flow control device 25, is preferably configured to minimize the pressure difference and/or air flow into the first entrance 11 of the pretreatment chamber 4.

An exemplary working of the control unit 200 will now be illustrated based on a situation wherein the pretreatment agent comprises steam and wherein the first signal and the second signal corresponds to a temperature. It should be clear that the signal may also correspond to a humidity, airflow and/or air pressure, etc.

As an example, when a temperature at the second sensor 242 is greater or equal to a temperature at the first sensor 241 minus a predefined value, for example 10 degrees, the rate of air extraction through the air extraction inlet 28 is decreased. The relatively high temperature as measured at the second sensor 242 is an indication that at the air extraction inlet 28, in addition to the extraction of ambient air, also air and/or steam from the pretreatment chamber 4 is extracted and that the rate or air extraction is actually too high, which results in a draft of air out of the pretreatment chamber 4 through the first entrance 11. In order to minimize this leakage of steam out of the tunnel oven entrance 5, the rate of air extraction through the air extraction inlet 28 is decreased, as described above.

When the temperature at the second sensor 242 is smaller than the temperature at the first sensor 241 minus the predefined value, the rate of air extraction through the air extraction unit 28 is increased. The relatively low temperature as measured at the second sensor 242 is an indication that very little or substantially no air from the pretreatment chamber 4 is extracted via the air extraction inlet 28, which can be an indication that the rate of air extraction is too little to substantially cancel the draft of ambient air through both the first entrance 11 and first exit 12 of the pretreatment chamber 4 in order to replace the air extracted from the baking chamber 3 via the exhaust 2, 22. As a result, ambient air will flow uncontrolled through the pretreatment zone 4' which will disturb the pretreatment process, such as the steam treatment, of the products 9 in the pretreatment chamber 4. This uncontrolled flow can be reduced or even substantially cancelled by increasing the rate of air extraction through the air extraction inlet 28, as described above.

The intake of air by the air extraction inlet 28 in front of the tunnel oven entrance 5, generates a region with a lower pressure at the tunnel oven entrance 5, compared to the ambient pressure, and effectively forms a low-pressure curtain at the tunnel oven entrance 5. As a result, the air pressure at the tunnel oven entrance 5 becomes closer to the air pressure in the baking chamber 3. Accordingly, the pressure difference between the first entrance 11 and the first exit 12 of the pretreatment chamber 4 is lowered or even substantially zero, and a draft through the pretreatment chamber 4 can be controlled to a desired level, can be minimized, or can even be nullified. It is noted that, depending on the selected rate of air extraction, air or pretreatment agent may flow from the pretreatment chamber 4 through the first entrance 11, into the air extraction inlet 28 and can be sensed by the sensor 23, which may be used to control the working of the air extraction unit 21, as described above.

As a result of the generation of a region with a lowered air pressure at the front of the tunnel oven 20, the conditions in the pretreatment zone 4' can substantially be stabilized and the rate of inflow of ambient air into the pretreatment chamber 4 and/or outflow of air with pretreatment agent out of the pretreatment chamber 4 can be controlled by controlling the rate of the air extraction through the air extraction inlet 28 by the air extraction unit 21. By suitably configuring and controlling the air extraction unit 21, to provide a suitable lower air pressure at the entrance of the tunnel oven, the inflow of ambient air into the first entrance 11 of the pretreatment chamber 4 can be reduced or substantially avoided. Accordingly, a disturbance of the pretreatment zone 4' is at least reduced and preferably is avoided by providing the air extraction unit 21 in front of the tunnel oven entrance 5.

It is noted that figure 2 further illustrates an alternative transport device 7 wherein the food products 9 are positioned directly on top of the transport device 7, thus without a baking tray.

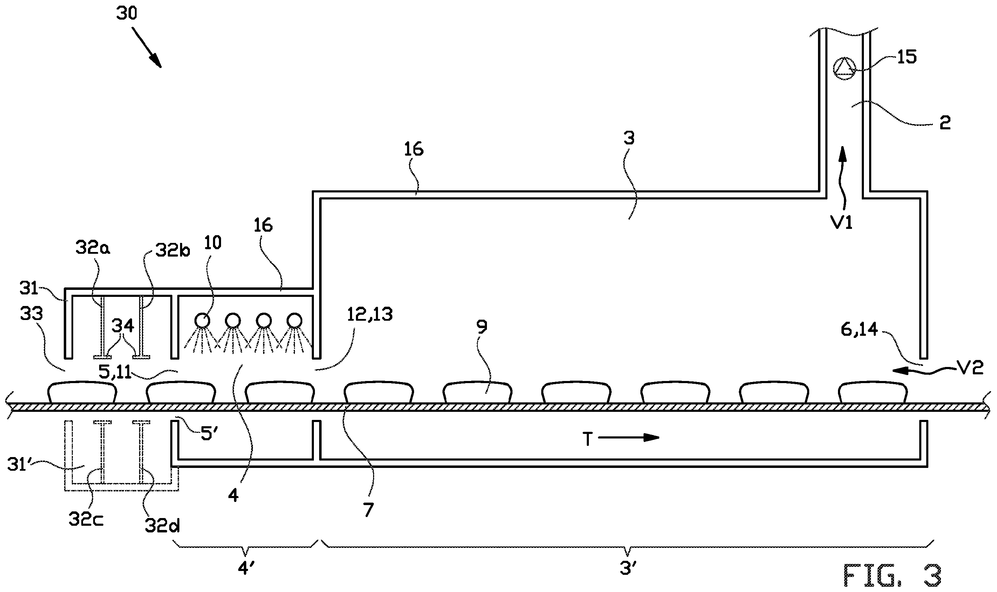

Figure 3 illustrates another example of a tunnel oven 30 based on a tunnel oven design substantially similar to the tunnel oven 1 as shown in figure 1. Corresponding features of the tunnel oven 30 of this example with respect to the tunnel oven 1 of figure 1 are indicated with the same reference numerals.

In addition, figure 3 illustrates an example of another embodiment of a pressure balancing unit in the form of an air resistance inducing unit 31. The air resistance inducing unit 31 is arranged in front of the tunnel oven entrance 5, in the transport direction T of the transport device 7 upstream to, or in front of, the pretreatment chamber 4. In the example of figure 3, the air resistance inducing unit 31 is integrally formed with the housing 16 of the tunnel oven 30, and as such, the air resistance inducing unit 31 is connected to the tunnel oven 30 in a substantially air-tight manner. In an alternative embodiment, the air resistance inducing unit 31 can also be a separate unit which is connected to the tunnel oven entrance 5, preferably in an air-tight manner.

The air resistance inducing unit 31 is configured to provide a resistance against an air flow over the transport device 7 towards the tunnel entrance 5. The air resistance inducing unit 31 comprises a plurality of baffles 32a-b positioned at least above the transport device 7. The air resistance inducing unit 31 illustrates a static or passive example of the present invention, wherein no additional moving or active elements are required to decrease a flow of external air through the tunnel entrance 5 and into the pretreatment chamber 4. This is achieved through the generation of turbulence in the air at the baffles 32a-b, which results in an increased resistance against the flow of air between the transport device 7 and the baffles 32a-b.

It is noted that the baffles 32a-b are designed and optimized in order to provide the desired air resistance when food products 9 or holders for food products are present on the transport device 7. Preferably, the baffles 32a-b are configured so that a distance between an upper side of the food products 9 or holders for food products and an edge 34 of the baffles 32a-b facing the transport device 7 is 40 mm or less, however the distance between the edges 34 of the baffles 32a-b and the upper surface of the transport device 7 must be large enough to allow an unhindered passage of the food products 9 and/or holders for food products.

It is further noted, that the air resistance inducing unit 31 is arranged above the transport device 7, which is sufficient at least when the transport device 7 comprises a substantially closed surface for carrying the food products 9 and/or when the part 5' of the tunnel oven entrance 5 below the transport device 7 is relatively small and/or relatively narrow, for example when the height of the part 5' of the tunnel oven entrance 5 is smaller than 50 mm, preferably smaller than 30 mm, more preferably smaller than 10 mm.

However, in a further example, the pressure balancing unit comprises an air resistance inducing unit 31, 31' which is arranged above and below the transport device 7, as indicated with the dotted line in figure 3, comprising multiple baffles 32a-b, 32c-d. Due to the air resistance provided by the air resistance inducing unit(s) 31 or 31, 31' in use, a pressure drop is created between the entrance 33 of the air resistance inducing unit(s) 31 or 31, 31' and the tunnel oven entrance 5, on both sides of the transport device 7.

The air resistance inducing unit 31 or 31, 31' typically spans or extends over substantially the whole width of the tunnel oven entrance 5. The plurality of baffles 32a, 32b, 32c, 32d are spaced apart along a transport direction T of the transport device 7, and extend along a substantially horizontal direction, perpendicular to the transport direction T.

Due to the air resistance inducing unit(s) 31 or 31, 31', in use, the air pressure at the first entrance 11 of the pretreatment chamber 4 is lower than the ambient pressure. As a result, the pressure difference between the first entrance 11 and the first exit 12 is lowered. Accordingly, there is a reduced propensity for air to flow from the external environment through the first entrance 11 into the pretreatment chamber 4. By suitably configuring the air resistance inducing unit(s) 31 or 31, 31', to provide a suitable air resistance, the inflow of ambient air into the first entrance 11 of the pretreatment chamber 4 can be reduced or substantially avoided. Accordingly, a disturbance of the pretreatment zone 4' is at least reduced and preferably is avoided by providing the air resistance inducing unit(s) 31 or 31, 31' in front of the tunnel oven entrance 5.

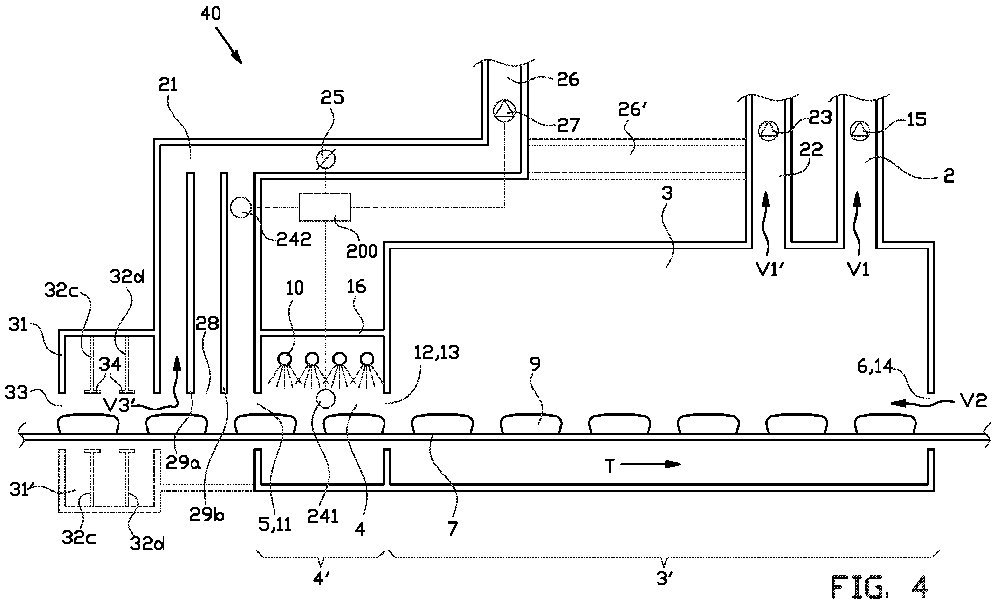

Figure 4 illustrates another example of a tunnel oven 40 based on a tunnel oven design substantially similar to the tunnel oven 1 as shown in figure 1. Corresponding features of the tunnel oven 40 of this example with respect to the tunnel oven 1 of figure 1 are indicated with the same reference numerals.

In addition, figure 4 illustrates an example wherein the pressure balancing unit comprises both an air extraction unit 21, as described in more detail above with reference to figure 2, and an air resistance inducing unit 31, as described in more detail above with reference to figure 3. Both the air extraction unit 21 and the air resistance inducing unit 31, are arranged in front of the tunnel oven entrance 5, in the transport direction T of the transport device 7 upstream to, or in front of, the pretreatment chamber 4. In the example of figure 4, the air extraction unit 21 is arranged in between the air resistance inducing unit 31 and the tunnel oven entrance 5. However, in an alternative embodiment, the air resistance inducing unit 31 can also be arranged in between the air extraction unit 21 and the tunnel oven entrance 5.

As shown in the example of figure 4, the combined air resistance inducing unit 31 and the air extraction unit 21, is integrally formed with the housing 16 of the tunnel oven 40, and as such, this combined air resistance inducing unit 31 and the air extraction unit 21, is connected to the tunnel oven 40 in a substantially air-tight manner. In an alternative embodiment, the combined air resistance inducing unit 31 and air extraction unit 21, can also be a separate unit which is connected to the tunnel oven entrance 5, preferably in an air-tight manner.

In the combined air resistance inducing unit 31 and air extraction unit 21, the air resistance inducing unit 31 provides a static or passive means for decreasing a flow of external air towards the tunnel oven entrance 5, whereas the air extraction unit 21 provides an active means for decreasing the pressure at the tunnel oven entrance 5 by regulating the rate of air extraction through the air extraction inlet 28. Since there is already a pressure drop over the air resistance inducing unit 31, the further reduction of the air pressure by the air extraction unit 21 does not have to be as large as when there is no air resistance inducing unit 31. In addition, when compared with a pressure balancing unit that only comprises an air resistance inducing unit 31, the combination also allows to adapt the pressure at the tunnel oven entrance 5 to changing ambient conditions, by regulating the rate of air extraction by the air extraction unit 21.

By suitably configuring the air resistance inducing unit(s) 31 or 31, 31' to provide a suitable air resistance, and by suitably controlling the rate of air extraction by the air extraction unit 21, the inflow of ambient air into the first entrance 11 of the pretreatment chamber 4 can be reduced or substantially avoided. Accordingly, a disturbance of the pretreatment zone 4' is at least reduced and preferably is avoided by providing the combined air resistance inducing unit(s) 31 or 31, 31' and air extraction unit 21, in front of the tunnel oven entrance 5.

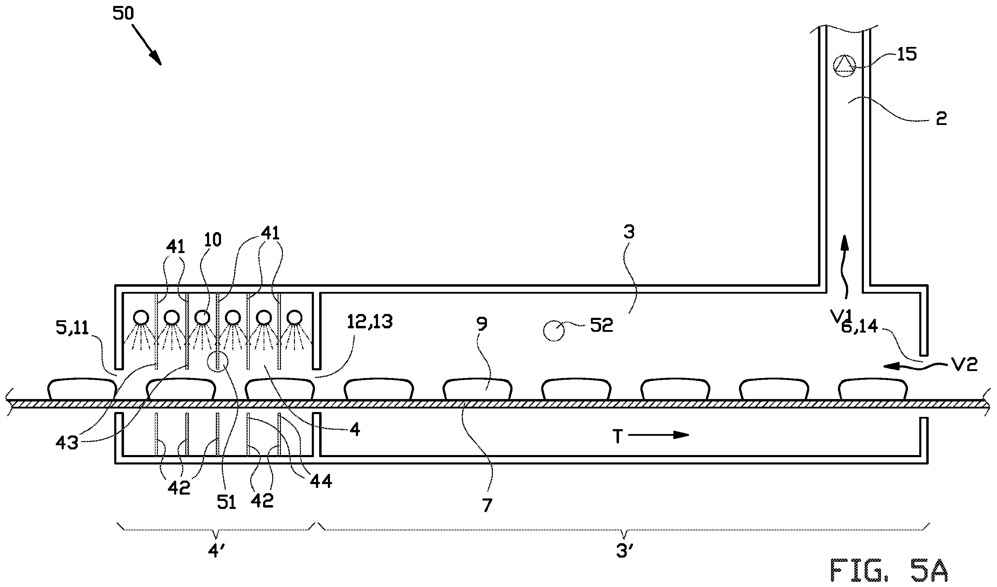

Figure 5A illustrates another example of a tunnel oven 50 based on a tunnel oven design substantially similar to the tunnel oven 1 as shown in figure 1. Corresponding features of the tunnel oven 50 of this example with respect to the tunnel oven 1 of figure 1 are indicated with the same reference numerals.

In addition, figure 5A illustrates an example wherein the pressure balancing unit comprises an air resistance inducing unit arranged inside the pretreatment chamber 4. The air resistance inducing unit inside the pretreatment chamber 4 comprises a plurality of baffles 41 positioned at least above the transport device 7. Preferably, the air resistance inducing unit inside the pretreatment chamber 4 comprises a plurality of baffles 42 positioned below the transport device 7. Also this air resistance inducing unit inside the pretreatment chamber 4 illustrates a static or passive example of the present invention, wherein no additional moving or active elements are required to decrease a flow of external air from the first entrance 11 to the first exit 12 of the pretreatment chamber 4. This is achieved through the generation of turbulence in the air at the baffles 41, 42, which results in an increased resistance against the flow of air from the first entrance 11 to the first exit 12 of the pretreatment chamber 4.

It is noted that the baffles 41 above the transport device 7 are designed and optimized in order to provide the desired air resistance when food products 9 or holders for food products are present on the transport device 7. Preferably, these baffles 41 are configured so that a distance between an upper side of the food products 9 or holders for food products and an edge 43 of the baffles 41 facing the transport device 7 is 40 mm or less, however the distance between the edges 43 of the baffles 41 and the upper surface of the transport device 7 must be large enough to allow an unhindered passage of the food products 9 and/or holders for food products. In addition, the baffles 41 are suitably arranged in order to allow that the pretreatment agent, such as steam, as provided via the injectors 10 can suitably interact with the food products 9 in the pretreatment chamber 4.

In this example, the baffles 41, 42 typically spans or extends over substantially the whole width of the pretreatment chamber 4. The plurality of baffles 41, 42 are spaced apart along a transport direction T of the transport device 7, and extend along a substantially horizontal direction, perpendicular to the transport direction T.

Due to the baffles 41, 42 in the pretreatment chamber 4, there is a reduced propensity for air to flow from the external environment through the first entrance 11 into the pretreatment chamber 4. By suitably configuring the baffles 41, 42, to provide a suitable air resistance, the inflow of ambient air into the first entrance 11 of the pretreatment chamber 4 can be reduced or substantially avoided. Accordingly, a disturbance of the pretreatment zone 4' is at least reduced and preferably is avoided.

The pretreatment chamber 4 of figure 5A is shown to further comprise a third sensor 51, and the baking chamber 3 comprising a fourth sensor 52. The third sensor 51 and the fourth sensor 52 are each configured for determining and providing a third signal and a fourth signal that corresponds to a temperature, humidity, air pressure and/or air flow in the pretreatment chamber 4 and the baking chamber 3, respectively. Although the pressure balancing unit of this example is a static means for decreasing the flow of external air through the pretreatment chamber 4, the third and fourth signal can be used to a control unit for controlling the exhauster 15. This control unit is preferably configured to lower or increase a speed or a capacity of the exhauster 15 based on the third signal and/or the fourth signal, in order to reduce or substantially avoid the inflow of ambient air into the first entrance 11 of the pretreatment chamber 4.

It is noted that the pretreatment chamber 4 and the baking chamber 3 can be accommodated in a single housing of the tunnel oven 50, and thus both the pretreatment chamber 4 and the baking chamber 3 form an integral part of the tunnel oven 50. In particular in the example schematically shown in figure 5A, the pretreatment chamber 4 is not a separate chamber in front of the baking chamber 3, or even a separate unit if front of the tunnel oven.

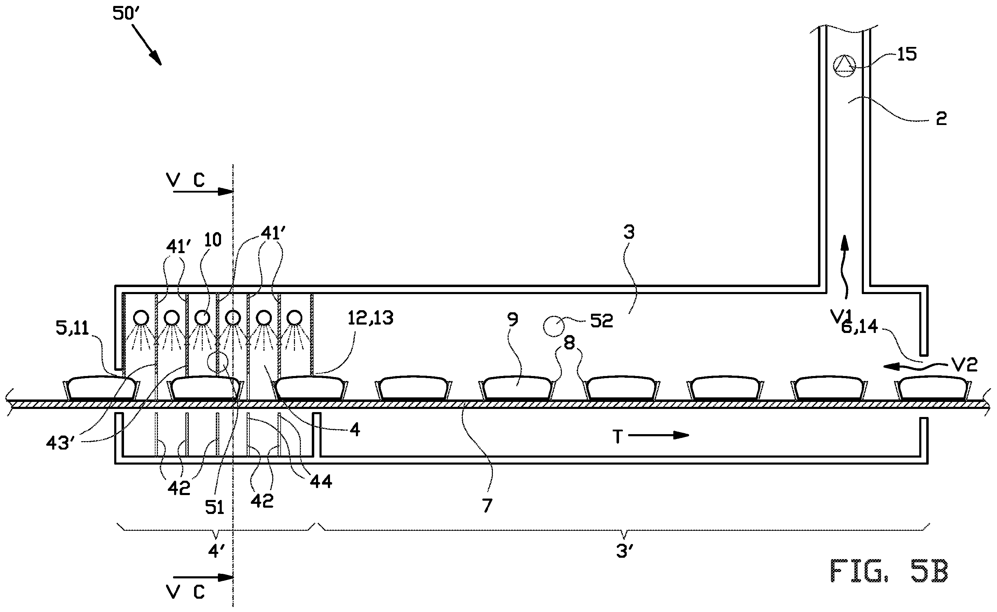

Figure 5B illustrates another example of a tunnel oven 50' based on a tunnel oven design substantially similar to the tunnel oven 1 as shown in figure 1.

In addition, figure 5B illustrates an example wherein the pressure balancing unit comprises an air resistance inducing unit arranged inside the pretreatment zone 4'. The air resistance inducing unit inside the pretreatment zone 4' comprises a plurality of curtains 41' positioned above the transport device 7. Said plurality of curtains 41' are arranged spaced apart in the transport direction T. As schematically shown in figure 5B, the curtains 41' are connected to the top wall of the pretreatment chamber 4, and extend from the top wall downwards towards the transport device 7, preferably, the curtains 41' hang substantially freely down from said top wall. The plurality of curtains 41' in the pretreatment zone 4' provide a resistance against air flow from the tunnel oven entrance 5 towards the baking zone 3', in a similar manner as the baffles 41 in the previously described example with reference to figure 5A. The plurality of curtains 41' inside the pretreatment zone 4' also provide a static or passive example of the pressure balancing unit of the present invention, wherein no additional moving or active elements are required to decrease a flow of external air from the tunnel entrance 5 towards the baking zone 3'. The plurality of curtains 41' are made from a flexible and/or pliable material. When a food product 9 and/or a holder for a food product, such as a baking tray 8, would inadvertently collide with one of the plurality of curtains 41', said curtain 41' can flex or bend out of the way to allow the food product 9 and/or the holder 8 for a food product to pass along. Accordingly, by using a plurality of curtains 41' in the pretreatment zone 4' as a pressure balancing unit, a congestion or blocking of the tunnel oven 50' due to an inadvertent collision and any downtime for removing the congestion in the tunnel oven 50', can substantially be avoided. The flexible and/or pliable curtains 41' also allow to configure the curtains such that an edge 43' of said plurality of curtains 41' facing towards the transport device 7, in use, is much closer to the food product 9 and/or the holder 8 for a food product, at least when compared to substantially rigid baffles 41 in the previous example. The smaller gap between the edge 43' of the curtains 41' and the food product 9 and/or holder 8 for the food product can provide an increased resistance against air flow from the tunnel oven entrance 5 towards the baking chamber 3.

As schematically shown in figure 5B, said plurality of curtains 41' are arranged to extend in a direction substantially parallel to the width direction of the tunnel oven entrance 5. Accordingly, said curtains 41' extend in a direction substantially perpendicular to an air flow from the tunnel oven entrance 5 towards the baking chamber 3 to provide a substantial equal resistance against air flow over the width of the tunnel oven.

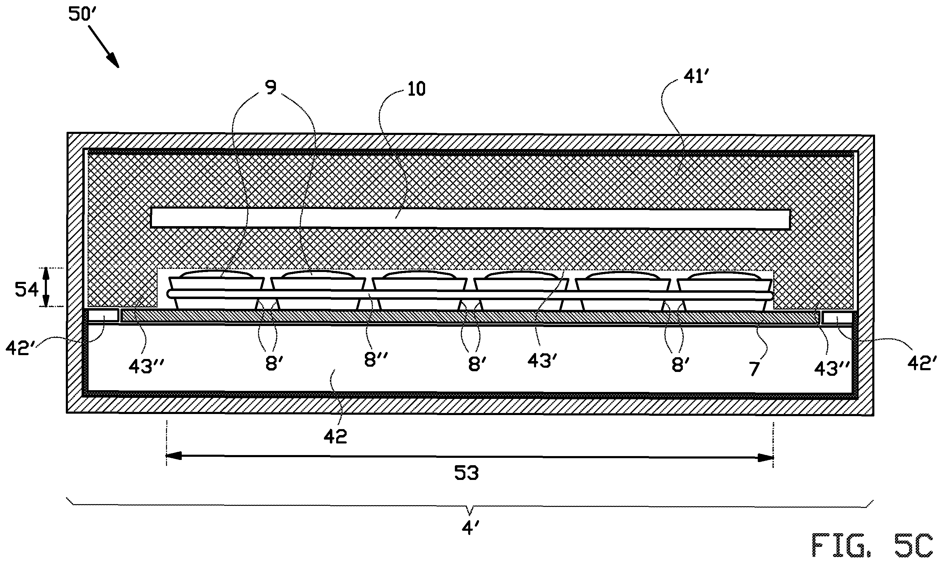

Figure 5C shows a schematic cross-section of the tunnel oven of figure 5B along the line VC-VC. As schematically shown the curtains 41' comprise a cut-out 53, 54 at the side facing away from the top wall. The curtain parts 43" adjacent to said cut-out 53, 54 reaches further down to a position near or touching an upper side of the transport device 7. These curtain parts 43" can, in use, substantially block an air flow adjacent to the food products 9 and/or holders for food products to a large extend. Accordingly, the parts 43" of the plurality of curtains 41' adjacent to the cut-outs 53, 54 provide an increased resistance against air flow from the tunnel oven entrance 5 towards the baking chamber 3.

As schematically shown in figure 5C, said cut-out in each one of said plurality of curtains is configured to allow a substantially un-obstructed passage of the dough products 9 and/or the holders for the dough products, such as baking tins 8' or a set of baking tins 8' coupled to each other by means of a coupling member 8". Preferably, said cut-out has a height 54 that is configured such that a gap between an edge 43' the one or more of said plurality of curtains in the cut-out and the upper side of said transport device 7 is in a range of 80 - 140 mm. In particular, the distance between the upper side of said part of the transport device 7 and the distal end 43' of the curtains 41' and the width 53 of the cut-out is chosen to be large enough to allow an un-obstructed passage of the dough products 9 and/or the holders for the dough products, such as baking tins 8'.

As further schematically shown in figure 5C, the bottom wall of the pretreatment zone 4' is provided with one or more baffles 42, wherein said one or more baffles 42 are connected to the bottom wall with a proximal end thereof. A distal end of said one or more baffles 42, opposite to the proximal end, is arranged near to a bottom side of said part of the transport device 7, wherein a distance between the bottom side of the transport device 7 and the distal end of the one or more baffles 42 is preferably in a range of 10 - 50 mm. Due to the relatively small distance between the bottom side of the transport device 7 and the distal end of the one or more baffles 42, the generation and/or effectivity of turbulence in the incoming air is enhanced, which results in an enhanced resistance against the flow of air through the pretreatment zone 4', at least along the bottom side of the transport device 7.

In addition, the side walls of the pretreatment zone 4' is provided with one or more baffles 42', wherein said one or more baffles 42' are connected to the corresponding side wall with a proximal end thereof. A distal end of said one or more baffles 42', opposite to the proximal end, is arranged near to a side edge of the transport device 7, wherein a distance between the side edge of the transport device 7 and the distal end of the one or more baffles 42' is preferably in a range of 10 - 50 mm. In an alternative example, the baffles 42' attached to the side walls of the pretreatment zone 4' and the baffle 42 attached to the bottom wall, all arranged at one cross-sectional plane, as for example shown in figure 5C, may be formed as an integral part.

In stead of using a single curtain 41', the curtain may comprise multiple strips. Such a curtain formed by a series of adjacently arranged strip may or may not be provided with a cut-out.

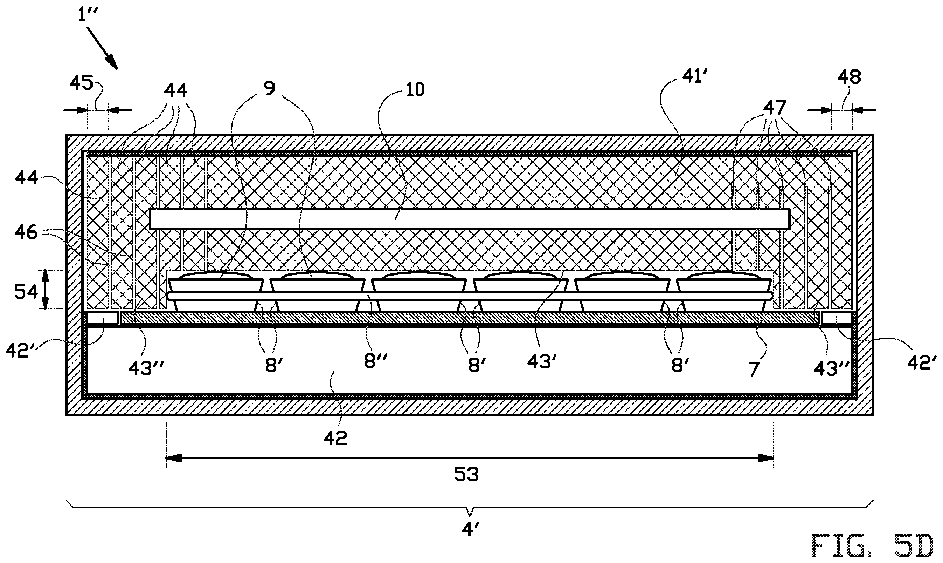

As schematically indicated on the left-hand side of figure 5D, the curtain 41' comprises multiple strips 44 which are arranged adjacently in a direction substantially parallel to the width direction of the tunnel oven 50'. Preferably the strips 44 have substantially the same width 45. The vertical edges 46 of adjacent strips may be arranged close together to allow a narrow slit or gap between the adjacent strips 44, they may be arranged to substantially abut against each other, or they may be arranged to overlap with the adjacent strip. When using the multiple strips 44 according to this example, the curtain 41' is preferably provided with these strips 44 over its complete width.

As schematically indicated on the right-hand side of figure 5D, the curtain 41' comprises a series of cuts 47 which extend in a substantially vertical direction. Said vertical cuts 47 are arranged spaced apart in a direction substantially parallel to the width direction of the tunnel oven 50'. Preferably the distance between adjacent vertical cuts 47 of said series of cuts in a direction substantially parallel to the width direction of the tunnel oven 50', is substantially the same distance 48. When using the multiple cuts 47 according to this example, the curtain 41' is preferably provided with these cuts 47 over its complete width.

The strips 44 or cuts 47, if present, are at least provided near the right-hand side and the left-hand side of the pretreatment zone 4', in particular where the edges of the row of baking tins 8' might collide with the curtain 41'. Also a curtain 41' without any strips 44 or cuts 47 may be employed as air resistance inducing unit inside the pretreatment chamber 4'.

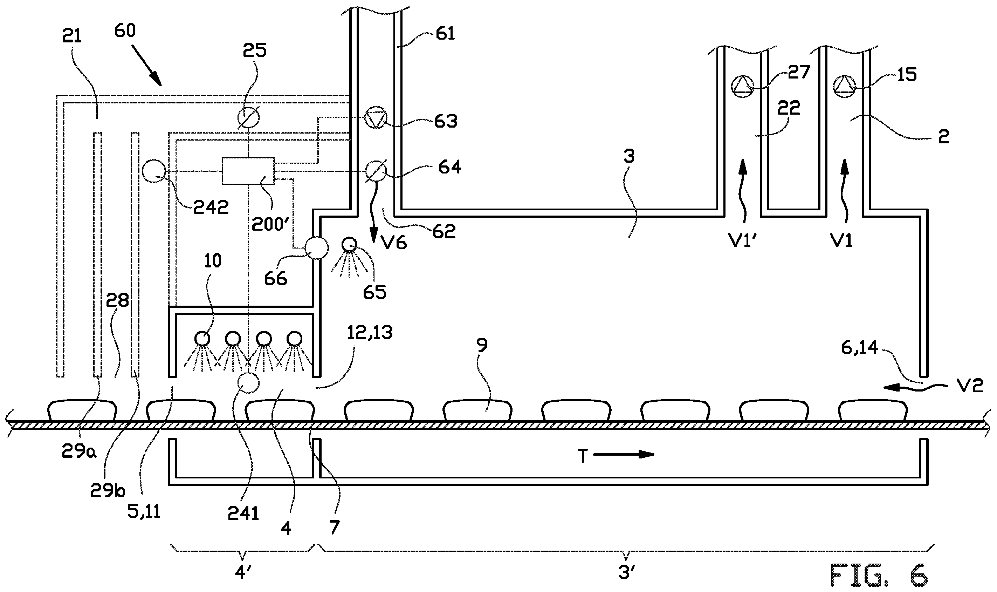

Figure 6 illustrates another example of a tunnel oven 60 based on a tunnel oven design substantially similar to the tunnel oven 1 as shown in figure 1. Corresponding features of the tunnel oven 60 of this example with respect to the tunnel oven 1 of figure 1 are indicated with the same reference numerals.

In addition, figure 6 illustrates an example wherein the pressure balancing unit comprises an air supply unit 61 comprising an air supply inlet 62 which is arranged at or near the transition between the pretreatment zone 4' and the baking zone 3'. The air supply inlet 62 is arranged to debouch in the baking chamber 3 at a position near the transition between the pretreatment zone 4' and the baking zone 3'. By introducing air in the region at or near the transition between the pretreatment zone 4' and the baking zone 3', an air pressure in said region can be increased. As a result, the reduction of the air pressure inside the baking chamber 3 due to the extraction of air from the baking chamber via the one or more air exhausts 2, 22, can at least at the transition between the pretreatment zone 4' and the baking zone 3' partially be compensated by the air supply unit 61. Accordingly, the air supply unit 61 allows to reduce a difference between the air pressure at the tunnel oven entrance 5 and the air pressure at entrance 13 of the baking chamber 3, which results in a reduction of a draft of air through the pretreatment chamber 4 and, accordingly, in a reduction or avoidance of a disturbance of the atmosphere in the pretreatment zone 4'.

The air supply unit 61 of the example in figure 6 comprises a blower 63, wherein said blower 63 is arranged in fluid connection with the air supply inlet 62. The blower 63 allows to regulate the amount of air supplied into the baking chamber 3 via the air supply inlet 62, and thus the local air pressure at the second entrance 13 of the baking chamber 3. In addition or alternatively, the amount of air supplied into the baking chamber 3 via the air supply inlet 62 can be regulated by means of a flow control device, for example a valve 64.

The baking chamber 3 is shown to further comprise a steam-injector 65 configured to provide steam and/or injecting steam to the baking chamber 3, wherein the steam-injector 65 is positioned at or near the air supply inlet 62. Optionally the steam-injector 65 can be positioned within the second air supply inlet 62. The introduction of steam can be performed for example to increase a humidity in the baking chamber 3, or to at least ensure that the air added via the air supply inlet 62 does not lead to an excessive change in the humidity as present at least in the first part of in the baking chamber 3.

As schematically shown in figure 6, the tunnel oven 60 further comprises a fifth sensor 66 configured for determining and providing a fifth signal that corresponds to an air pressure and/or air flow, respectively. The fifth sensor 65 can, for example, be configured to determine a difference between the air pressure outside the housing 16 of the tunnel oven 60 and the air pressure inside the baking chamber 3, at least at or near the second entrance 13 of the baking chamber 3. In addition or alternatively, the fifth sensor 66 comprises an open connection in the housing 16 of the tunnel oven 60, and the fifth sensor 65 is configured to measure an air flow from the inside of the baking chamber 3 to the outside of the tunnel oven 60 or *vice versa.* The direction of the air flow through the fifth sensor 65 provides an indication of the air pressure inside the baking chamber 3 being larger that the ambient air pressure outside the tunnel oven 60, or *vice versa.* The magnitude of the air flow through the fifth sensor 65 provides a measure of the magnitude of the difference between the air pressure inside the baking chamber 3 and the ambient air pressure outside the tunnel oven 60.

In the example of figure 6, the fifth signal from the fifth sensor 65 is used as an input for the control device 200', wherein the control device 200' is configured to control the blower 63 and/or the valve 64 in order to adjust the inflow of air through the air supply inlet 62 if necessary, and thus to control the air pressure at the entrance 13 of the baking chamber 3 with respect to the ambient pressure outside the tunnel oven 60, and thus to control a draft of air through the pretreatment chamber 4 in order to reduce or avoid a disturbance of the atmosphere in the pretreatment zone 4'.

As schematically shown in figure 6, the air supply unit 61 is configured to used fresh ambient air from the external environment for introducing it in the baking chamber 3 via the air supply inlet 62.

In addition or alternatively, the air supply unit 61 can also be connected to one of the air exhausts 2, 45 of the baking chamber 3 (not shown). Accordingly, the air from the part of the baking chamber 3 at or near the air exhaust 2 can be used for introducing it in the baking chamber 3 via the air supply inlet 62.

In addition or alternatively, the tunnel oven 60 can also be provided with an air extraction unit 21 as described in more detail above with reference to figure 2. In this case, the air extracted from the region at or near the tunnel oven entrance 5, can be used for introducing it in the baking chamber 3 via the air supply inlet 62.

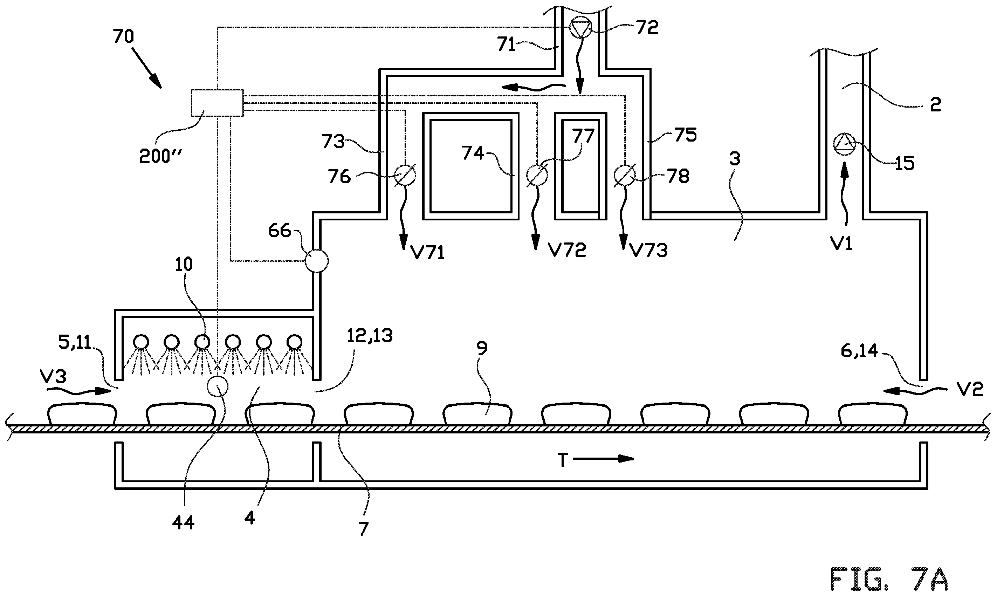

Figure 7A illustrates another example of a tunnel oven 70 based on a tunnel oven design substantially similar to the tunnel oven 1 as shown in figure 1. Corresponding features of the tunnel oven 70 of this example with respect to the tunnel oven 1 of figure 1 are indicated with the same reference numerals.

In addition, figure 7A illustrates an example wherein the pressure balancing unit comprises an air supply unit 71 comprising multiple air supply inlets V71, V72, V73 each of which is provided with a flow control device 76, 77, 78 which is configured for controlling an air flow through a corresponding air supply conduit 73, 74, 75. Preferably the flow control device 76, 77, 78 comprises an valve, preferably an electrically, hydraulically or pneumatically controllable valve.

The first air supply inlet V71 as shown in figure 7A essentially provides the same function as the air supply inlet 62 of the example of figure 6. As shown in figure 7A, this example comprises a second and a third air supply inlet V72, V73 which are arranged spaced apart in a direction parallel to the transport direction T of the transport device 7.

The first air supply inlet V71 is arranged at or near the transition between the pretreatment chamber 4 and the baking chamber 3. By introducing air in this region at or near the transition between the second entrance 13 of the baking chamber 3, an air pressure in said region can be increased. As a result, the reduction of the air pressure inside the baking chamber 3 due to the extraction of air from the baking chamber via the air exhaust 2, can at least at the transition between the pretreatment chamber 4 and the baking chamber partially be compensated by the air supply unit 71. Accordingly, the air supply unit 71 allows to reduce a difference between the air pressure at the tunnel oven entrance 5 and the air pressure at entrance 13 of the baking chamber 3, which results in a reduction of a draft of air through the pretreatment chamber 4 and, accordingly, in a reduction or avoidance of a disturbance of the atmosphere in the pretreatment chamber 4.

In addition to this, the example of figure 7A further allows to introduce air via the second and/or third air supply inlet V72, V73, which allows to adjust and control, for example, the dew point temperature at various positions in the baking chamber 3, in particular at various positions in a direction along the transport direction T of the transport device 7.

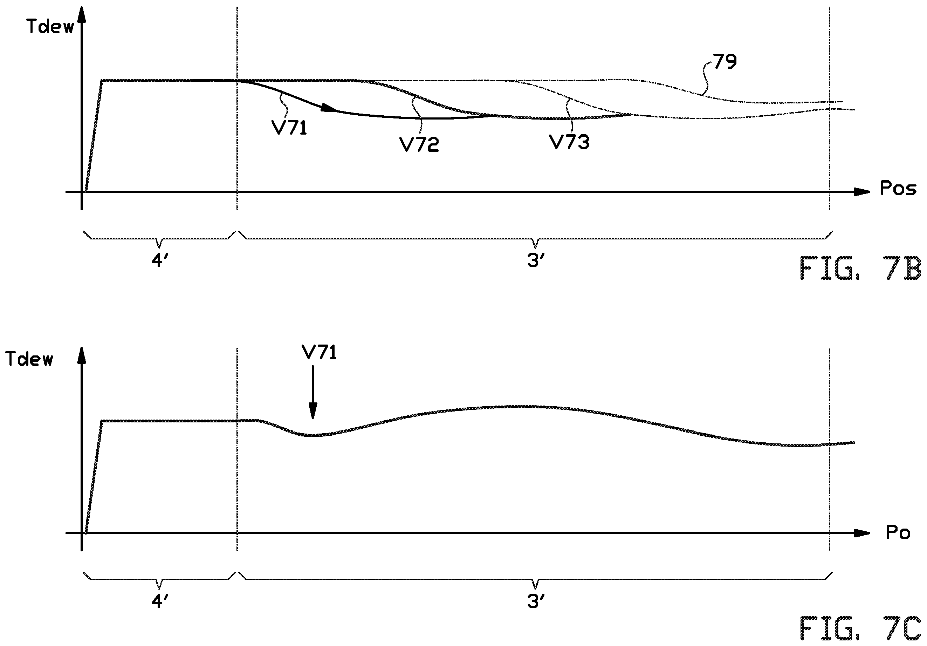

For example, when only the first air supply inlet V71 is used, in the same way as described above with reference to figure 6, the dew point temperature T_{dew} may follow a pattern 79 as shown in figure 7B. In this situation, the dew point temperature T_{dew} goes to a lower value at the end of the baking zone 3' as schematically shown in figure 7B.

By also providing an inflow of air via the third air supply inlet V73, the decrease in the dew point temperature T_{dew} can be arranged to start at a position at or near the third air supply inlet V73. By providing an inflow of air via the second air supply inlet V72 and the third air supply inlet V73, the decrease in the dew point temperature T_{dew} can be arranged to start at a position at or near the second air supply inlet V72. By providing an increased inflow at the first air supply inlet V71 and an inflow of air via the second air supply inlet V72 and the third air supply inlet V73, the decrease in the dew point temperature T_{dew} can be arranged to start at a position at or near the first air supply inlet V71. Accordingly, by suitably using a controller 200" for controlling the blower 72 and/or controlling the flow control devices 76, 77, 78 a desired profile of the dew point temperature in the baking zone 3', preferably in addition to a reduced disturbance of the pretreatment zone 4'.

For example, by providing an increased inflow at the first air supply inlet V71 and blocking an inflow of air via the second air supply inlet V72 and the third air supply inlet V73, the profile of the dew point temperature in the baking chamber can be provided with a decreased dew point temperature at or near the first air supply inlet 71. However due to the release of moisture from the food products 9, in particular when these are dough products, the dew point temperature downstream of the first air supply inlet 71 can rise again as schematically shown in figure 7C. Such a profile can for example be advantageous for the baking of Rye bread.

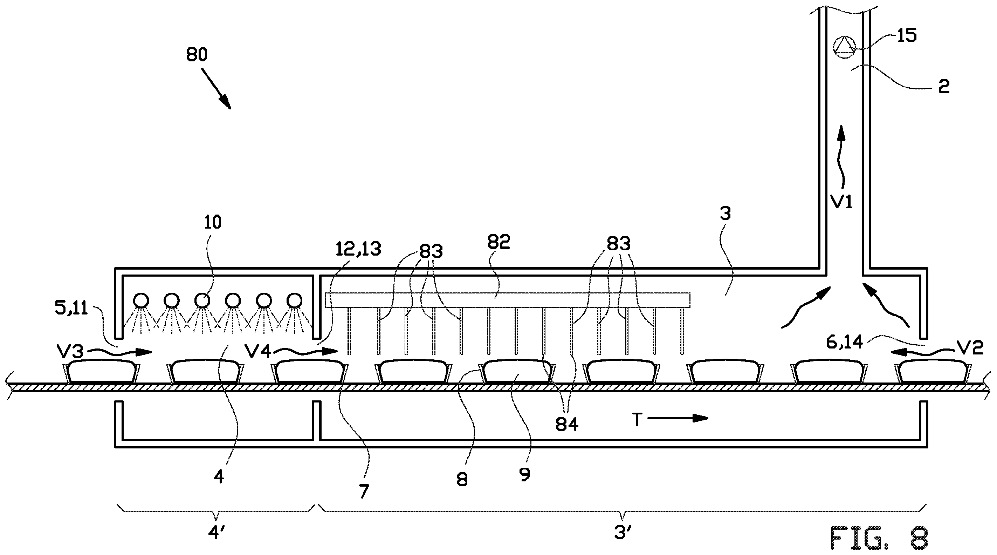

Figure 8 illustrates another example of a tunnel oven 80 based on a tunnel oven design substantially similar to the tunnel oven 1 as shown in figure 1. Corresponding features of the tunnel oven 80 of this example with respect to the tunnel oven 1 of figure 1 are indicated with the same reference numerals.

In addition, figure 8 illustrates an example wherein the pressure balancing unit comprises an air resistance inducing unit arranged inside the baking chamber 3. The air resistance inducing unit inside the baking chamber 3 comprises a plurality of baffles 83 positioned at least above the transport device 7. Said plurality of baffles are arranged between the pretreatment zone 4' and the air exhaust 2 and are arranged spaced apart in a direction substantially parallel to the transport direction T. Said baffles 83 extend in a direction substantially parallel to the width direction of the tunnel oven entrance 5 and in a vertical direction from the top wall towards the transport device 7. Accordingly, the baffles 93 in the baking zone 3' provide a resistance against air flow from the tunnel oven entrance 5 towards the air exhaust 2.

It is noted that instead of substantially rigid baffles 83, curtains may also be applied in a similar manner as in the example described above with reference to figures 5B and 5C. However, the curtains used must be made from a heat-resistant material.

As schematically shown in the example of figure 8, the baking zone 3' comprises a heating element 82 which is arranged in a plane parallel to and above a part of the transport device 7. Said baffles 83 are connected to the heating element 82 with a proximal end thereof, and a distal end of said baffles 83, opposite to the proximal end, is arranged facing an upper side of the transport device 7. In addition to its function as a pressure balancing unit, the one or more baffles 83 of this example also act as reinforcement for the heating element 82, in particular in a direction parallel to the baffles 83. In particular the heating element may comprises elongated tubes or plates provided with ducts, such as a heating plate. Said tubes or ducts provide passages for passing there through a heating medium, particularly oil. The heating element 82 in the baking chamber 3 are configured for heating the food products 9 by means of radiation and optionally convection.

The distance between the upper side of the transport device 7 and the distal end 84 of the one or more baffles 83 is configured to be large enough to allow an unobstructed passage of the dough products 9 and/or the holders for the dough products, such as baking tins 8.

It is noted that when the pretreatment zone 4' and/or the baking zone 3' are provided with a plurality of baffles 41, 83 or curtains 41', than these baffles 41, 83 or curtains 41' can also be used to substantially separate the pretreatment zone 4' from the baking zone 3', as schematically shown in figure 5B.

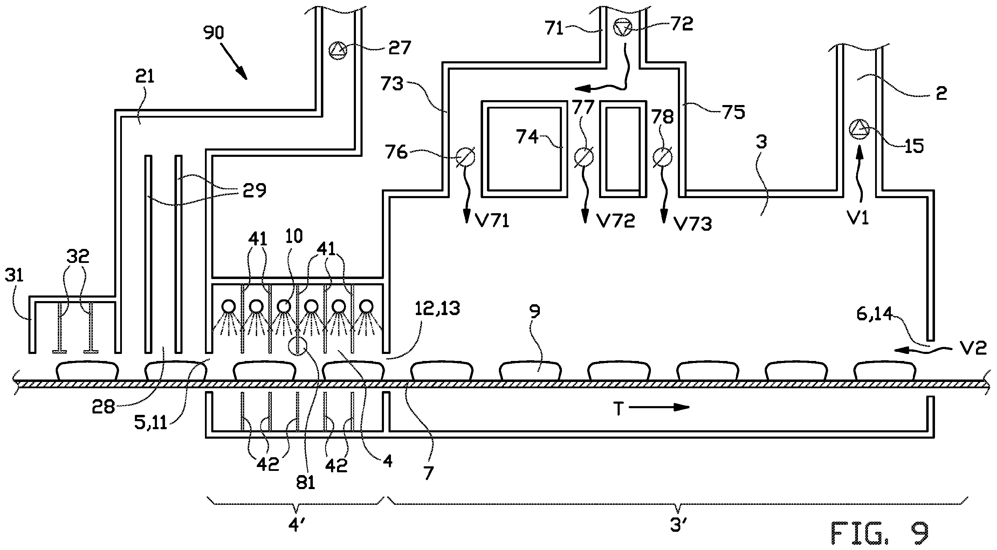

Figure 9 illustrates another example of a tunnel oven 90 based on a tunnel oven design substantially similar to the tunnel oven 1 as shown in figure 1. Corresponding features of the tunnel oven 90 of this example with respect to the tunnel oven 1 of figure 1 are indicated with the same reference numerals.

In addition, figure 9 illustrates an example wherein the pressure balancing unit comprises:
- an air extraction unit 21, as described in more detail above with reference to figure 2;
- an air resistance inducing unit 31, as described in more detail above with reference to figure 3;
- an air resistance inducing unit inside the pretreatment chamber 4, as described in more detail above with reference to figure 5A or figure 5B and 5C; and
- an air supply unit 71, as described in more detail above with reference to figure 7A.

The difference units 21, 31, 71 of the pressure balancing unit allow to accurately control the baking process, by reducing or avoiding a disturbance of the pretreatment zone 4' and/or provide a desired dew point temperature profile in the baking zone 3'.

It is noted that in all of the examples in the figures, the pretreatment zone 4' is not provided with an air exhaust, in particular an air exhaust at or near the top wall of the pretreatment chamber 4. The air exhaust 2 for extracting air from the baking zone 3' is arranged spaced apart from the pretreatment zone 4', in particular the air exhaust 2 for extracting air from the baking zone is arranged at side of the baking chamber 3 facing away from the pretreatment zone 4', in particular near the tunnel oven exit 6.

It is to be understood that the above description is included to illustrate the operation of the preferred embodiments and is not meant to limit the scope of the invention. From the above discussion, many variations will be apparent to one skilled in the art that would yet be encompassed by the scope of the present invention.

In summary: the invention relates to a tunnel oven for baking food products, comprising successively a tunnel oven entrance, a pretreatment zone, a baking zone, and a tunnel oven exit. The tunnel oven further comprises, a transport device configured for transporting food products through the tunnel oven, a heating source arranged in the baking zone, an air exhaust for extracting air from the baking zone, and a pretreatment zone which comprises an injector for injecting a pretreatment agent into the pretreatment zone. The pretreatment zone does not comprise an air exhaust at or near a top wall of the pretreatment zone. The tunnel oven further comprises a pressure balancing unit for controlling a pressure difference between an air pressure in the pretreatment zone and an air pressure in the baking zone, and for substantially reducing or nullifying an airflow into the pretreatment zone via the tunnel oven entrance.

## Claims

1. A tunnel oven (1, 20, 30, 40, 50, 50', 1'', 60, 70, 80, 90) for the preparation of food products (9) , in particular dough products, wherein the tunnel oven comprises:
a tunnel oven entrance (5), a tunnel oven exit (6) and a baking zone (3') inside said tunnel oven between the tunnel oven entrance and the tunnel oven exit,
a transport device (7) configured for transporting food products into the tunnel oven entrance, through the baking zone, and out of the tunnel oven exit,
a heating source (82) arranged in the baking zone,
an air exhaust (2) configured for extracting air from the baking zone, and
a pretreatment zone (4'), arranged in between the baking zone and the tunnel oven entrance, wherein the pretreatment zone comprises an injector (10) configured for injecting a pretreatment agent into the pretreatment zone,
wherein the pretreatment zone and the baking zone each comprises a bottom wall, a top wall and two side walls which surround a part of the transport device that is configured for transporting the food products through respectively the pretreatment zone or the baking zone of the tunnel oven, and wherein the pretreatment zone does not comprise an air exhaust at or near the top wall of the pretreatment zone,
**characterized in that** the tunnel oven further comprises a pressure balancing unit configured for controlling a pressure difference between a first air pressure in the pretreatment zone and a second air pressure in the baking zone, wherein said pressure balancing unit is configured for substantially reducing or nullifying an airflow into the pretreatment zone via the tunnel oven entrance,
wherein said pressure balancing unit comprises:
- a plurality of baffles (41) and/or a plurality of curtains (41') arranged inside said pretreatment zone, wherein said plurality of baffles and/or said plurality of curtains are arranged spaced apart in a direction (T) away from the oven entrance and towards the baking zone, wherein one or more of said baffles are connected to said top wall, and wherein said baffles extend from the top wall towards said part of the transport device,
- an air resistance inducing unit (31) comprising a tunnel section which is mounted in a substantially air-tight manner to the tunnel oven entrance and wherein the tunnel section comprises a top wall and two side walls, wherein the two side walls are arranged adjacent to opposite lateral sides of a part of the transport device in front of the tunnel oven entrance and wherein the top wall is arranged above said part of the transport device, wherein the tunnel section comprises a plurality of baffles (32a, 32b) which are arranged inside said tunnel section, wherein said plurality of baffles are arranged spaced apart in a direction (T) towards the tunnel oven entrance, wherein one or more of said baffles are connected to said top wall, and wherein said baffles extend from the top wall towards said part of the transport device, and/or
- a plurality of curtains made from a heat-resistant material and/or a plurality of baffles (83) arranged inside said baking zone, wherein said plurality of baffles and/or said plurality of curtains are arranged between the pretreatment zone and the air exhaust and are arranged spaced apart in a direction (T) away from the oven entrance and towards the oven exit, and wherein said baffles extend in a direction substantially parallel to the width direction of the tunnel oven entrance and in a direction from the top wall towards said part of the transport device.

2. The tunnel oven according to claim 1, wherein the pretreatment zone (4') comprises a first sensor (241, 51) configured to provide a first signal, wherein the first signal provides a measure for a dew point, temperature, humidity, air pressure and/or air flowrate in the pretreatment zone.

3. The tunnel oven according to claim 1 or 2, wherein the pressure balancing unit comprises an air extraction unit (21) comprising an air extraction inlet (28) configured for extracting air from a region at or near the tunnel oven entrance (5), wherein the air extraction inlet (28) is positioned at a side of the pretreatment zone (4') that is opposite to the baking zone (3'),
preferably wherein the air extraction inlet extends substantially along an entire width of the tunnel oven entrance, preferably wherein the air extraction inlet extend at least along the entire width of the tunnel oven entrance, or wherein the air extraction unit comprises multiple inlets, wherein said multiple inlets are distributed along the width of the tunnel oven entrance,
preferably wherein the air extraction unit comprises an air suction unit (26) and an air extraction unit exhaust, wherein the air suction unit is configured for actively transporting air between the air extraction inlet and the air extraction unit exhaust,
preferably wherein the air extraction unit comprises a second sensor (242) configured to provide a second signal, wherein the second signal provides a measure for a temperature, humidity, air pressure and/or air flowrate in the air extraction unit.

4. The tunnel oven according to claim 3, when dependent on claim 2, wherein the air extraction unit (21) further comprises a first control unit (200) connected to the suction unit (26), the first sensor (241), and/or the second sensor (242), wherein the first control unit is configured to control a speed and/or a capacity of the suction unit based on the first signal and/or the second signal,
preferably wherein the air extraction unit further comprises a first flow control device (25), wherein the first flow control device is connected to the first control unit, wherein the first flow control device is configured for controlling an airflow through the air extraction unit based on a control signal from the first control unit, preferably the first flow control device comprises an valve, preferably an electrically, hydraulically or pneumatically controllable valve.

5. The tunnel oven according to any one of the claims 1 - 4, wherein the tunnel oven comprises:
horizontally adjustable partition walls for adjusting a width of the tunnel oven entrance (5) and/or vertically adjustable partition walls for adjusting a height of the tunnel oven entrance, and/or
horizontally adjustable partition walls for adjusting a width of the transition between the pretreatment zone (4') and the baking zone (3') and/or vertically adjustable partition walls for adjusting a height of the transition between the pretreatment zone and the baking zone,
wherein said width and height are arranged in a plane substantially perpendicular to a transport direction (T) of the transport device (7).

6. The tunnel oven according to any one of the claims 1 - 5, wherein said one or more baffles (32a, 32b) of the air resistance inducing unit (31) are connected to the top wall with a proximal end thereof, wherein a distal end of said one or more baffles, opposite to the proximal end, is arranged near to an upper side of said part of the transport device (7), wherein a distance between the upper side of said part of the transport device and the distal end of the one or more baffles is in a range of 80 - 140 mm,
preferably wherein the distance between the upper side of said part of the transport device and the distal end of the one or more baffles is large enough to allow an unobstructed passage of the dough products (9) and/or the holders (8) for the dough products, such as baking tins, preferably wherein said distance is configured such that a gap between the distal end of the one or more baffles and the upper side of said dough product and/or the upper side of said holders for the dough product, is in a range of 10 - 50 mm.

7. The tunnel oven according to any one of the claims 1 - 6, wherein the pressure balancing unit comprises an air resistance inducing unit (31) and an air extraction unit (21), wherein the air resistance inducing unit and the air extraction unit are arranged in series in front of the tunnel oven entrance (5).

8. The tunnel oven according to any one of the claims 1 - 7, wherein said one or more baffles (41) inside the pretreatment zone (4') are connected to the top wall with a proximal end thereof, wherein a distal end of said one or more baffles, opposite to the proximal end, is arranged near to an upper side of said part of the transport device (7), wherein a distance between the upper side of said part of the transport device and the distal end of the one or more baffles is in a range of 80 - 140 mm,
preferably wherein the distance between the upper side of said part of the transport device and the distal end of the one or more baffles is configured to allow an unobstructed passage of the dough products (9) and/or the holders (8) for the dough products, such as baking tins, preferably wherein said distance is configured such that a gap between the distal end of the one or more baffles and the upper side of said dough product and/or the upper side of said holders for the dough product, is in a range of 10 - 50 mm.

9. The tunnel oven according to any one of the claims 1 - 7, wherein one or more of said plurality of curtains (41') inside the pretreatment zone (4') are connected to said top wall, and wherein said one or more of said plurality of curtains extend from the top wall towards said part of the transport device (7),
preferably wherein one or more of said plurality of curtains are extend in a direction substantially parallel to the width direction of the tunnel oven entrance (5), and/or in a direction substantially perpendicular to a transport direction (T) of the transport device, in particular perpendicular to the transport direction of the transport device at or near the position of said one or more curtains.

10. The tunnel oven according to claim 8 or claim 9, wherein said bottom wall is provided with one or more baffles (42), wherein said one or more baffles are connected to the bottom wall with a proximal end thereof, wherein a distal end of said one or more baffles, opposite to the proximal end, is arranged near to a bottom side of said part of the transport device (7), wherein a distance between the bottom side of said part of the transport device and the distal end of the one or more baffles is in a range of 10 - 50 mm.

11. The tunnel oven according to any one of the claims 1 - 6, wherein the baking zone (3') comprises a heating element (82) which is arranged in a plane parallel to and above a part of the transport device (7), wherein said one or more baffles (83) inside the baking zone are connected to the heating element with a proximal end thereof, wherein a distal end of said one or more baffles, opposite to the proximal end, is arranged facing an upper side of said part of the transport device, preferably wherein a distance between the upper side of said part of the transport device and the distal end of the one or more baffles is in a range of 80 - 140 mm.

12. The tunnel oven according to any one of the claims 1 - 11, wherein the pressure balancing unit comprises an air supply unit (61, 71) comprising an air supply inlet (62, V71, V72, V73) which is arranged at or near the transition between the pretreatment zone (4') and the baking zone (3'), wherein the air supply unit is configured for providing air substantially into:
the transition between the pretreatment zone and the baking zone, or
the baking zone, at least near the transition between the pretreatment zone and the baking zone,
preferably wherein the air supply inlet is arranged to debouch in the baking zone at a position near the transition between the pretreatment zone and the baking zone.

13. A method for preparing food products (9) in a tunnel oven (1, 20, 30, 40, 50, 50', 1", 60, 70, 80, 90) according to any one of the claims 1 - 12, wherein the method comprises the step of:
- controlling a pressure difference between a first air pressure in the pretreatment zone (4') and a second air pressure in the baking zone (3') using said pressure balancing unit in order to substantially reduce or nullify an airflow into the pretreatment zone via the tunnel oven entrance (5).

14. The method according to claim 13, wherein the pressure balancing unit comprises an air extraction unit (21) according to claim 3 or claim 4, wherein the method comprises the step of:
- extracting air at a first air extraction rate from the region at or near the tunnel oven entrance (5) for controlling the pressure difference for substantially reducing or nullifying an airflow into the pretreatment zone (4') via the tunnel oven entrance,
preferably wherein the method further comprises the following steps:
- determining a temperature, humidity, air pressure and/or air flowrate in the pretreatment zone and/or the air extraction unit;
- setting the first air extraction rate based on the determination of the temperature, humidity, air pressure and/or air flowrate in the pretreatment chamber (4) and/or the air extraction unit.

15. The method according to claim 13, wherein the pressure balancing unit comprises an air supply unit (61, 71) according to claim 12, wherein the method further comprise the step of:
- supplying air at a first air supply rate through said first air supply inlet (62, V71, V72, V73) or said one or more air supply inlets (V71, V72, V73)into the baking zone (3'), at least at a position at or near the transition between the pretreatment zone (4') and the baking zone, for controlling the pressure difference for substantially reducing or nullifying an airflow into the pretreatment zone via the tunnel oven entrance (5),
preferably wherein the method further comprises the following steps:
- determining a temperature, humidity, air pressure and/or air flowrate in the pretreatment zone and/or the baking zone;
- setting the first air supply rate based on the determination of the temperature, humidity, air pressure and/or air flowrate in the pretreatment zone and/or the baking zone,
preferably wherein the method further comprises the step of: providing steam to the baking zone at a first steam addition rate, wherein the first steam addition rate is determined based on the temperature and/or humidity in the baking zone.

## Patentansprüche

1. Tunnelofen (1, 20, 30, 40, 50, 50', 1", 60, 70, 80, 90) zur Herstellung von Lebensmittelprodukten (9), insbesondere Teigprodukten, wobei der Tunnelofen umfasst:
einen Tunnelofeneingang (5), einen Tunnelofenausgang (6) und eine Backzone (3') innerhalb des Tunnelofens zwischen dem Tunnelofeneingang und dem Tunnelofenausgang,
eine Transportvorrichtung (7), die dazu eingerichtet ist, Lebensmittelprodukte in den Tunnelofeneingang, durch die Backzone und aus dem Tunnelofenausgang zu befördern,
eine Heizquelle (82), die in der Backzone angeordnet ist,
eine Luftabführung (2), die zum Absaugen von Luft aus der Backzone eingerichtet ist, und
eine Vorbehandlungszone (4'), die zwischen der Backzone und dem Tunnelofeneingang angeordnet ist, wobei die Vorbehandlungszone einen Injektor (10) umfasst, der dazu eingerichtet ist, ein Vorbehandlungsmittel in die Vorbehandlungszone einzuspritzen,
wobei die Vorbehandlungszone und die Backzone jeweils eine Bodenwand, eine obere Wand und zwei Seitenwände umfassen, die einen Teil der Transportvorrichtung umgeben, der dazu eingerichtet ist, die Lebensmittelprodukte durch jeweils die Vorbehandlungszone oder die Backzone des Tunnelofens zu befördern, und wobei die Vorbehandlungszone keine Luftabführung bei oder nahe der oberen Wand der Vorbehandlungszone umfasst,
**dadurch gekennzeichnet, dass**
der Tunnelofen ferner eine Druckausgleichseinheit umfasst, die zum Steuern einer Druckdifferenz zwischen einem ersten Luftdruck in der Vorbehandlungszone und einem zweiten Luftdruck in der Backzone eingerichtet ist, wobei die Druckausgleichseinheit dazu eingerichtet ist, im Wesentlichen einen Luftstrom in die Vorbehandlungszone durch den Tunnelofeneingang zu reduzieren oder zu annullieren,
wobei die Druckausgleichseinheit umfasst:
- eine Vielzahl von Leitblechen (41) und/oder eine Vielzahl von Vorhängen (41'), die innerhalb der Vorbehandlungszone angeordnet sind,
wobei die Vielzahl von Leitblechen und/oder die Vielzahl von Vorhängen beabstandet in einer Richtung (T) weg vom Ofeneingang und hin zur Backzone angeordnet sind, wobei eines oder mehrere der Leitbleche mit der oberen Wand verbunden sind, und wobei sich die Leitbleche von der oberen Wand in Richtung des Teils der Transportvorrichtung erstrecken,
- eine Luftwiderstandinduzierungseinheit (31), die einen Tunnelabschnitt umfasst, der in einer im Wesentlichen luftdichten Weise an den Tunnelofeneingang montiert ist, und wobei der Tunnelabschnitt eine obere Wand und zwei Seitenwände umfasst, wobei die zwei Seitenwände angrenzend an entgegengesetzte Querseiten eines Teils der Transportvorrichtung vor dem Tunnelofeneingang angeordnet sind, und wobei die obere Wand über dem Teil der Transportvorrichtung angeordnet ist, wobei der Tunnelabschnitt eine Vielzahl von Leitblechen (32a, 32b) umfasst, die innerhalb des Tunnelabschnitts angeordnet sind, wobei die Vielzahl von Leitblechen beabstandet in einer Richtung (T) hin zum Tunnelofeneingang angeordnet sind, wobei eines oder mehrere der Leitbleche mit der oberen Wand verbunden sind, und wobei sich die Leitbleche von der oberen Wand in Richtung des Teils der Transportvorrichtung erstrecken, und/oder
- eine Vielzahl von Vorhängen, die aus einem hitzebeständigen Material bestehen, und/oder eine Vielzahl von Leitblechen (83), die innerhalb der Backzone angeordnet sind, wobei die Vielzahl von Leitblechen und/oder die Vielzahl von Vorhängen zwischen der Vorbehandlungszone und der Luftabführung angeordnet sind und beabstandet in einer Richtung (T) weg vom Ofeneingang und hin zum Ofenausgang angeordnet sind, und wobei sich die Leitbleche in einer Richtung, die im Wesentlichen parallel zur Breitenrichtung des Tunnelofeneingangs ist, und in einer Richtung von der oberen Wand hin zu dem Teil der Transportvorrichtung erstrecken.

2. Tunnelofen nach Anspruch 1, wobei die Vorbehandlungszone (4') einen ersten Sensor (241, 51) umfasst, der zum Bereitstellen eines ersten Signals eingerichtet ist, wobei das erste Signal ein Maß für einen Taupunkt, eine Temperatur, eine Feuchtigkeit, einen Luftdruck und/oder einen Luftdurchsatz in der Vorbehandlungszone bereitstellt.

3. Tunnelofen nach Anspruch 1 oder 2, wobei die Druckausgleichseinheit eine Luftabsaugeinheit (21) umfasst, die einen Luftabsaugeinlass (28) umfasst, der zum Absaugen von Luft aus einem Bereich bei oder nahe dem Tunnelofeneingang (5) eingerichtet ist, wobei der Luftabsaugeinlass (28) auf einer Seite der Vorbehandlungszone (4') positioniert ist, die der Backzone (3') gegenüberliegt,
vorzugsweise wobei sich der Luftabsaugeinlass im Wesentlichen entlang einer gesamten Breite des Tunnelofeneingangs erstreckt, vorzugsweise wobei sich der Luftabsaugeinlass mindestens entlang der gesamten Breite des Tunnelofeneingangs erstreckt, oder wobei die Luftabsaugeinheit mehrere Einlässe umfasst, wobei die mehreren Einlässe entlang der Breite des Tunnelofeneingangs verteilt sind,
vorzugsweise wobei die Luftabsaugeinheit eine Luftansaugeinheit (26) und eine Luftabsaugeinheitabführung umfasst, wobei die Luftansaugeinheit dazu eingerichtet ist, aktiv Luft zwischen dem Luftabsaugeinlass und der Luftabsaugeinheitabführung zu fördern,
vorzugsweise wobei die Luftabsaugeinheit einen zweiten Sensor (242) umfasst, der zum Bereitstellen eines zweiten Signals eingerichtet ist, wobei das zweite Signal ein Maß für eine Temperatur, eine Feuchtigkeit, einen Luftdruck und/oder einen Luftdurchsatz in der Luftabsaugeinheit bereitstellt.

4. Tunnelofen nach Anspruch 3, wenn abhängig von Anspruch 2, wobei die Luftabsaugeinheit (21) ferner eine erste Steuereinheit (200) umfasst, die mit der Ansaugeinheit (26), dem ersten Sensor (241) und/oder dem zweiten Sensor (242) verbunden ist, wobei die erste Steuereinheit dazu eingerichtet ist, eine Geschwindigkeit und/oder Kapazität der Ansaugeinheit auf der Grundlage des ersten Signals und/oder des zweiten Signals zu steuern,
vorzugsweise wobei die Luftabsaugeinheit ferner eine erste Strömungssteuervorrichtung (25) umfasst, wobei die erste Strömungssteuervorrichtung mit der ersten Steuereinheit verbunden ist, wobei die erste Strömungssteuervorrichtung zum Steuern eines Luftstroms durch die Luftabsaugeinheit auf der Grundlage eines Steuersignals von der ersten Steuereinheit eingerichtet ist, vorzugsweise wobei die erste Strömungssteuervorrichtung ein Ventil umfasst, vorzugsweise ein elektrisch, hydraulisch oder pneumatisch steuerbares Ventil.

5. Tunnelofen nach einem der Ansprüche 1 bis 4, wobei der Tunnelofen umfasst:
horizontal einstellbare Unterteilungswände zum Einstellen einer Breite des Tunnelofeneingangs (5) und/oder vertikal einstellbare Unterteilungswände zum Einstellen einer Höhe des Tunnelofeneingangs, und/oder
horizontal einstellbare Unterteilungswände zum Einstellen einer Breite des Übergangs zwischen der Vorbehandlungszone (4') und der Backzone (3') und/oder vertikal einstellbare Unterteilungswände zum Einstellen einer Höhe des Übergangs zwischen der Vorbehandlungszone und der Backzone,
wobei die Breite und die Höhe in einer Ebene liegen, die im Wesentlichen senkrecht zu einer Transportrichtung (T) der Transportvorrichtung (7) ist.

6. Tunnelofen nach einem der Ansprüche 1 bis 5, wobei das eine oder die mehreren Leitbleche (32a, 32b) der Luftwiderstandinduzierungseinheit (31) mit einem nahen Ende derselben mit der oberen Wand verbunden sind, wobei ein dem nahen Ende entgegengesetztes fernes Ende des einen oder der mehreren Leitbleche in der Nähe einer Oberseite des Teils der Transportvorrichtung (7) angeordnet ist, wobei ein Abstand zwischen der Oberseite des Teils der Transportvorrichtung und dem fernen Ende des einen oder der mehreren Leitbleche in einem Bereich von 80 bis 140 mm liegt,
vorzugsweise wobei der Abstand zwischen der Oberseite des Teils der Transportvorrichtung und dem fernen Ende des einen oder der mehreren Leitbleche groß genug ist, um einen ungehinderten Durchlauf der Teigprodukte (9) und/oder der Behälter (8) für die Teigprodukte, wie beispielsweise Backformen, zu ermöglichen, vorzugsweise wobei der Abstand derart ausgestaltet ist, dass eine Lücke zwischen dem fernen Ende des einen oder der mehreren Leitbleche und der Oberseite des Teigprodukts und/oder der Oberseite der Behälter für das Teigprodukt in einem Bereich von 10 bis 50 mm liegt.

7. Tunnelofen nach einem der Ansprüche 1 bis 6, wobei die Druckausgleichseinheit eine Luftwiderstandinduzierungseinheit (31) und eine Luftabsaugeinheit (21) umfasst, wobei die Luftwiderstandinduzierungseinheit und die Luftabsaugeinheit in Reihe vor dem Tunnelofeneingang (5) angeordnet sind.

8. Tunnelofen nach einem der Ansprüche 1 bis 7, wobei das eine oder die mehreren Leitbleche (41) in der Vorbehandlungszone (4') mit einem nahen Ende derselben mit der oberen Wand verbunden sind, wobei ein dem nahen Ende entgegengesetztes fernes Ende des einen oder der mehreren Leitbleche in der Nähe einer Oberseite des Teils der Transportvorrichtung (7) angeordnet ist, wobei ein Abstand zwischen der Oberseite des Teils der Transportvorrichtung und dem fernen Ende des einen oder der mehreren Leitbleche in einem Bereich von 80 bis 140 mm liegt,
vorzugsweise wobei der Abstand zwischen der Oberseite des Teils der Transportvorrichtung und dem fernen Ende des einen oder der mehreren Leitbleche dazu ausgestaltet ist, einen ungehinderten Durchlauf der Teigprodukte (9) und/oder der Behälter (8) für die Teigprodukte, wie beispielsweise Backformen, zu ermöglichen, vorzugsweise wobei der Abstand derart ausgestaltet ist, dass eine Lücke zwischen dem fernen Ende des einen oder der mehreren Leitbleche und der Oberseite des Teigprodukts und/oder der Oberseite der Behälter für das Teigprodukt in einem Bereich von 10 bis 50 mm liegt.

9. Tunnelofen nach einem der Ansprüche 1 bis 7, wobei einer oder mehrere der Vielzahl von Vorhängen (41') in der Vorbehandlungszone (4') mit der oberen Wand verbunden sind und wobei sich der eine oder die mehreren der Vielzahl von Vorhängen von der oberen Wand in Richtung des Teils der Transportvorrichtung (7) erstrecken,
vorzugsweise wobei sich einer oder mehrere der Vielzahl von Vorhängen in einer Richtung, die im Wesentlichen parallel zur Breitenrichtung des Tunnelofeneingangs (5) ist, und/oder in einer Richtung, die im Wesentlichen senkrecht zu einer Transportrichtung (T) der Transportvorrichtung, insbesondere senkrecht zur Transportrichtung der Transportvorrichtung an oder nahe der Position des einen oder der mehreren Vorhänge ist, erstrecken.

10. Tunnelofen nach Anspruch 8 oder Anspruch 9, wobei die Bodenwand mit einem oder mehreren Leitblechen (42) versehen ist, wobei das eine oder die mehreren Leitbleche mit einem nahen Ende derselben mit der Bodenwand verbunden sind, wobei ein dem nahen Ende entgegengesetztes fernes Ende des einen oder der mehreren Leitbleche in der Nähe einer Unterseite des Teils der Transportvorrichtung (7) angeordnet ist, wobei ein Abstand zwischen der Unterseite des Teils der Transportvorrichtung und dem fernen Ende des einen oder der mehreren Leitbleche in einem Bereich von 10 bis 50 mm liegt.

11. Tunnelofen nach einem der Ansprüche 1 bis 6, wobei die Backzone (3') ein Heizelement (82) umfasst, das in einer Ebene angeordnet ist, die parallel zu einem Teil der Transportvorrichtung (7) ist und darüber liegt, wobei das eine oder die mehreren Leitbleche (83) innerhalb der Backzone mit einem nahen Ende derselben mit dem Heizelement verbunden sind, wobei ein dem nahen Ende entgegengesetztes fernes Ende des einen oder der mehreren Leitbleche einer Oberseite des Teils der Transportvorrichtung zugewandt angeordnet ist, vorzugsweise wobei ein Abstand zwischen der Oberseite des Teils der Transportvorrichtung und dem fernen Ende des einen oder der mehreren Leitbleche in einem Bereich von 80 bis 140 mm liegt.

12. Tunnelofen nach einem der Ansprüche 1 bis 11, wobei die Druckausgleichseinheit eine Luftzuführeinheit (61, 71) umfasst, die einen Luftzuführeinlass (62, V71, V72, V73) umfasst, der an oder nahe dem Übergang zwischen der Vorbehandlungszone (4') und der Backzone (3') angeordnet ist, wobei die Luftzuführeinheit dazu eingerichtet ist, Luft im Wesentlichen in Folgendes abzugeben:
den Übergang zwischen der Vorbehandlungszone und der Backzone, oder
die Backzone, zumindest nahe dem Übergang zwischen der Vorbehandlungszone und der Backzone,
vorzugsweise wobei der Luftzuführeinlass dazu eingerichtet ist, in die Backzone an einer Position nahe dem Übergang zwischen der Vorbehandlungszone und der Backzone zu münden.

13. Verfahren zur Herstellung von Lebensmittelprodukten (9) in einem Tunnelofen (1, 20, 30, 40, 50, 50', 1", 60, 70, 80, 90) nach einem der Ansprüche 1 bis 12, wobei das Verfahren den folgenden Schritt umfasst:
- Steuern einer Druckdifferenz zwischen einem ersten Luftdruck in der Vorbehandlungszone (4') und einem zweiten Luftdruck in der Backzone (3') unter Verwendung der Druckausgleichseinheit, um im Wesentlichen einen Luftstrom in die Vorbehandlungszone durch den Tunnelofeneingang (5) zu reduzieren oder zu annullieren.

14. Verfahren nach Anspruch 13, wobei die Druckausgleichseinheit eine Luftabsaugeinheit (21) nach Anspruch 3 oder Anspruch 4 umfasst, wobei das Verfahren den folgenden Schritt umfasst:
- Absaugen von Luft mit einer ersten Luftabsaugrate aus dem Bereich bei oder nahe dem Tunnelofeneingang (5) zum Steuern der Druckdifferenz, um im Wesentlichen einen Luftstrom in die Vorbehandlungszone (4') durch den Tunnelofeneingang zu reduzieren oder zu annullieren,
vorzugsweise wobei das Verfahren ferner die folgenden Schritte umfasst:
- Bestimmen einer Temperatur, einer Feuchtigkeit, eines Luftdrucks und/oder eines Luftdurchsatzes in der Vorbehandlungszone und/oder der Luftabsaugeinheit;
- Einstellen der ersten Luftabsaugrate auf der Grundlage der Bestimmung der Temperatur, der Feuchtigkeit, des Luftdrucks und/oder des Luftdurchsatzes in der Vorbehandlungskammer (4) und/oder der Luftabsaugeinheit.

15. Verfahren nach Anspruch 13, wobei die Druckausgleichseinheit eine Luftzuführeinheit (61, 71) nach Anspruch 12 umfasst, wobei das Verfahren ferner den folgenden Schritt umfasst:
- Zuführen von Luft mit einer ersten Luftzuführrate durch den ersten Luftzuführeinlass (62, V71, V72, V73) oder den einen oder die mehreren Luftzuführeinlässe (V71, V72, V73) in die Backzone (3') zumindest an einer Position an oder nahe dem Übergang zwischen der Vorbehandlungszone (4') und der Backzone zum Steuern der Druckdifferenz, um im Wesentlichen einen Luftstrom in die Vorbehandlungszone durch den Tunnelofeneingang (5) zu reduzieren oder zu annullieren,
vorzugsweise wobei das Verfahren ferner die folgenden Schritte umfasst:
- Bestimmen einer Temperatur, einer Feuchtigkeit, eines Luftdrucks und/oder eines Luftdurchsatzes in der Vorbehandlungszone und/oder der Backzone;
- Einstellen der ersten Luftzuführrate auf der Grundlage der Bestimmung der Temperatur, der Feuchtigkeit, des Luftdrucks und/oder des Luftdurchsatzes in der Vorbehandlungszone und/oder der Backzone,
vorzugsweise wobei das Verfahren ferner den folgenden Schritt umfasst: Abgeben von Dampf an die Backzone mit einer ersten Dampfzugaberate, wobei die erste Dampfzugaberate auf der Grundlage der Temperatur und/oder Feuchtigkeit in der Backzone bestimmt wird.

## Revendications

1. Four tunnel (1, 20, 30, 40, 50, 50', 1'', 60, 70, 80, 90) pour la préparation de produits alimentaires (9), en particulier de produits à base de pâte, le four tunnel comprenant:
une entrée de four tunnel (5), une sortie de four tunnel (6) et une zone de cuisson (3') à l'intérieur dudit four tunnel entre l'entrée de four tunnel et la sortie de four tunnel,
un dispositif de transport (7) configuré pour transporter des produits alimentaires dans l'entrée de four tunnel, à travers la zone de cuisson et hors de la sortie de four tunnel,
une source de chauffage (82) disposée dans la zone de cuisson,
un échappement d'air (2) configuré pour extraire de l'air à partir de la zone de cuisson, et
une zone de prétraitement (4'), disposée entre la zone de cuisson et l'entrée de four tunnel, la zone de prétraitement comprenant un injecteur (10) configuré pour injecter un agent de prétraitement dans la zone de prétraitement,
la zone de prétraitement et la zone de cuisson comprenant chacune une paroi inférieure, une paroi supérieure et deux parois latérales qui entourent une partie du dispositif de transport qui est configurée pour transporter les produits alimentaires à travers respectivement la zone de prétraitement ou la zone de cuisson du four tunnel, et la zone de prétraitement ne comprenant pas d'échappement d'air à ou près de la paroi supérieure de la zone de prétraitement,
**caractérisé par le fait que** le four tunnel comprend en outre une unité d'équilibrage de pression configurée pour commander une différence de pression entre une première pression d'air dans la zone de prétraitement et une seconde pression d'air dans la zone de cuisson, ladite unité d'équilibrage de pression étant configurée pour réduire sensiblement ou annuler un écoulement d'air dans la zone de prétraitement par l'intermédiaire de l'entrée de four tunnel,
ladite unité d'équilibrage de pression comprenant:
- une pluralité de déflecteurs (41) et/ou une pluralité de rideaux (41') disposés à l'intérieur de ladite zone de prétraitement, ladite pluralité de déflecteurs et/ou ladite pluralité de rideaux étant disposés de manière espacée dans une direction (T) éloignée de l'entrée de four et vers la zone de cuisson, un ou plusieurs desdits déflecteurs étant reliés à ladite paroi supérieure, et lesdits déflecteurs s'étendant de la paroi supérieure vers ladite partie du dispositif de transport,
- une unité provoquant une résistance à l'air (31) comprenant une section de tunnel qui est montée d'une manière sensiblement étanche à l'air à l'entrée de four tunnel et la section de tunnel comprenant une paroi supérieure et deux parois latérales, les deux parois latérales étant disposées adjacentes à des côtés latéraux opposés d'une partie du dispositif de transport devant l'entrée de four tunnel et la paroi supérieure étant disposée au-dessus de ladite partie du dispositif de transport, la section de tunnel comprenant une pluralité de déflecteurs (32a, 32b) qui sont disposés à l'intérieur de ladite section de tunnel, ladite pluralité de déflecteurs étant disposés de manière espacée dans une direction (T) vers l'entrée de four tunnel, un ou plusieurs desdits déflecteurs étant reliés à ladite paroi supérieure, et lesdits déflecteurs s'étendant de la paroi supérieure vers ladite partie du dispositif de transport, et/ou
- une pluralité de rideaux fabriqués dans un matériau résistant à la chaleur et/ou une pluralité de déflecteurs (83) disposés à l'intérieur de ladite zone de cuisson, ladite pluralité de déflecteurs et/ou ladite pluralité de rideaux étant disposés entre la zone de prétraitement et l'échappement d'air et étant disposés de manière espacée dans une direction (T) éloignée de l'entrée de four et vers la sortie de four, et lesdits déflecteurs s'étendant dans une direction sensiblement parallèle à la direction de largeur de l'entrée de four tunnel et dans une direction de la paroi supérieure vers ladite partie du dispositif de transport.

2. Four tunnel selon la revendication 1, dans lequel la zone de prétraitement (4') comprend un premier capteur (241, 51) configuré pour fournir un premier signal, le premier signal fournissant une mesure pour un point de rosée, une température, une humidité, une pression d'air et/ou un débit d'air dans la zone de prétraitement.

3. Four tunnel selon la revendication 1 ou 2, dans lequel l'unité d'équilibrage de pression comprend une unité d'extraction d'air (21) comprenant une entrée d'extraction d'air (28) configurée pour extraire de l'air d'une région à ou près de l'entrée de four tunnel (5), l'entrée d'extraction d'air (28) étant positionnée sur un côté de la zone de prétraitement (4') qui est opposé à la zone de cuisson (3'),
de préférence, l'entrée d'extraction d'air s'étendant sensiblement le long de toute la largeur de l'entrée de four tunnel, de préférence, l'entrée d'extraction d'air s'étendant au moins le long de toute la largeur de l'entrée de four tunnel, ou l'unité d'extraction d'air comprenant de multiples entrées, lesdites multiples entrées étant réparties le long de la largeur de l'entrée de four tunnel,
de préférence, l'unité d'extraction d'air comprenant une unité d'aspiration d'air (26) et un échappement d'unité d'extraction d'air, l'unité d'aspiration d'air étant configurée pour transporter activement de l'air entre l'entrée d'extraction d'air et l'échappement d'unité d'extraction d'air,
de préférence, l'unité d'extraction d'air comprenant un second capteur (242) configuré pour fournir un second signal, le second signal fournissant une mesure pour une température, une humidité, une pression d'air et/ou un débit d'air dans l'unité d'extraction d'air.

4. Four tunnel selon la revendication 3, en dépendance de la revendication 2, dans lequel l'unité d'extraction d'air (21) comprend en outre une première unité de commande (200) connectée à l'unité d'aspiration (26), au premier capteur (241) et/ou au second capteur (242), la première unité de commande étant configurée pour commander une vitesse et/ou une capacité de l'unité d'aspiration sur la base du premier signal et/ou du second signal,
de préférence, l'unité d'extraction d'air comprenant en outre un premier dispositif de commande d'écoulement (25), le premier dispositif de commande d'écoulement étant connecté à la première unité de commande, le premier dispositif de commande d'écoulement étant configuré pour commander un écoulement d'air à travers l'unité d'extraction d'air sur la base d'un signal de commande provenant de la première unité de commande, de préférence le premier dispositif de commande d'écoulement comprenant une soupape, de préférence une soupape à commande électrique, hydraulique ou pneumatique.

5. Four tunnel selon l'une quelconque des revendications 1 à 4, dans lequel le four tunnel comprend:
des parois de séparation réglables horizontalement pour régler une largeur de l'entrée de four tunnel (5) et/ou des parois de séparation réglables verticalement pour régler une hauteur de l'entrée de four tunnel, et/ou
des parois de séparation réglables horizontalement pour régler une largeur de la transition entre la zone de prétraitement (4') et la zone de cuisson (3') et/ou des parois de séparation réglables verticalement pour régler une hauteur de la transition entre la zone de prétraitement et la zone de cuisson,
dans lequel ladite largeur et ladite hauteur sont disposées dans un plan sensiblement perpendiculaire à une direction de transport (T) du dispositif de transport (7).

6. Four tunnel selon l'une quelconque des revendications 1 à 5, dans lequel ledit au moins un déflecteur (32a, 32b) de l'unité provoquant une résistance à l'air (31) est relié à la paroi supérieure par une extrémité proximale de celui-ci, une extrémité distale dudit au moins un déflecteur, opposée à l'extrémité proximale, étant disposée près d'un côté supérieur de ladite partie du dispositif de transport (7), une distance entre le côté supérieur de ladite partie du dispositif de transport et l'extrémité distale de l'au moins un déflecteur se situant dans une plage de 80 à 140 mm,
de préférence, la distance entre le côté supérieur de ladite partie du dispositif de transport et l'extrémité distale de l'au moins un déflecteur étant suffisamment grande pour permettre un passage sans obstruction des produits à base de pâte (9) et/ou des supports (8) pour les produits à base de pâte, tels que des moules à pâtisserie, de préférence, ladite distance étant configurée de telle sorte qu'un espacement entre l'extrémité distale de l'au moins un déflecteur et le côté supérieur dudit produit à base de pâte et/ou le côté supérieur desdits supports pour le produit à base de pâte, se situe dans une plage de 10 à 50 mm.

7. Four tunnel selon l'une quelconque des revendications 1 à 6, dans lequel l'unité d'équilibrage de pression comprend une unité provoquant une résistance à l'air (31) et une unité d'extraction d'air (21), l'unité provoquant une résistance à l'air et l'unité d'extraction d'air étant disposées en série devant l'entrée de four tunnel (5).

8. Four tunnel selon l'une quelconque des revendications 1 à 7, dans lequel ledit au moins un déflecteur (41) à l'intérieur de la zone de prétraitement (4') est relié à la paroi supérieure par une extrémité proximale de celui-ci, une extrémité distale dudit au moins un déflecteur, opposée à l'extrémité proximale, étant disposée près d'un côté supérieur de ladite partie du dispositif de transport (7), une distance entre le côté supérieur de ladite partie du dispositif de transport et l'extrémité distale de l'au moins un déflecteur se situant dans une plage de 80 à 140 mm,
de préférence, la distance entre le côté supérieur de ladite partie du dispositif de transport et l'extrémité distale de l'au moins un déflecteur étant configurée pour permettre un passage sans obstruction des produits à base de pâte (9) et/ou des supports (8) pour les produits à base de pâte, tels que des moules à pâtisserie, de préférence, ladite distance étant configurée de telle sorte qu'un espacement entre l'extrémité distale de l'au moins un déflecteur et le côté supérieur dudit produit à base de pâte et/ou le côté supérieur desdits supports pour le produit à base de pâte, se situe dans une plage de 10 à 50 mm.

9. Four tunnel selon l'une quelconque des revendications 1 à 7, dans lequel un ou plusieurs parmi ladite pluralité de rideaux (41') à l'intérieur de la zone de prétraitement (4') sont reliés à ladite paroi supérieure, et dans lequel ledit ou lesdits rideaux parmi ladite pluralité de rideaux s'étendent de la paroi supérieure vers ladite partie du dispositif de transport (7),
de préférence, dans lequel un ou plusieurs parmi ladite pluralité de rideaux s'étendent dans une direction sensiblement parallèle à la direction de largeur de l'entrée de four tunnel (5), et/ou dans une direction sensiblement perpendiculaire à une direction de transport (T) du dispositif de transport, en particulier perpendiculaire à la direction de transport du dispositif de transport à ou près de la position dudit ou desdits rideaux.

10. Four tunnel selon la revendication 8 ou la revendication 9, dans lequel ladite paroi inférieure comporte un ou plusieurs déflecteurs (42), ledit au moins un déflecteur étant relié à la paroi inférieure par une extrémité proximale de celui-ci, une extrémité distale dudit au moins un déflecteur, opposée à l'extrémité proximale, étant disposée près d'un côté inférieur de ladite partie du dispositif de transport (7), une distance entre le côté inférieur de ladite partie du dispositif de transport et l'extrémité distale de l'au moins un déflecteur se situant dans une plage de 10 à 50 mm.

11. Four tunnel selon l'une quelconque des revendications 1 à 6, dans lequel la zone de cuisson (3') comprend un élément chauffant (82) qui est disposé dans un plan parallèle à et au-dessus d'une partie du dispositif de transport (7), ledit au moins un déflecteur (83) à l'intérieur de la zone de cuisson étant relié à l'élément chauffant par une extrémité proximale de celui-ci, une extrémité distale dudit au moins un déflecteur, opposée à l'extrémité proximale, étant disposée face à un côté supérieur de ladite partie du dispositif de transport, de préférence une distance entre le côté supérieur de ladite partie du dispositif de transport et l'extrémité distale de l'au moins un déflecteur se situant dans une plage de 80 à 140 mm.

12. Four tunnel selon l'une quelconque des revendications 1 à 11, dans lequel l'unité d'équilibrage de pression comprend une unité d'alimentation en air (61, 71) comprenant une entrée d'alimentation en air (62, V71, V72, V73) qui est disposée à ou près de la transition entre la zone de prétraitement (4') et la zone de cuisson (3'), l'unité d'alimentation en air étant configurée pour fournir de l'air sensiblement dans:
la transition entre la zone de prétraitement et la zone de cuisson, ou
la zone de cuisson, au moins près de la transition entre la zone de prétraitement et la zone de cuisson,
de préférence, l'entrée d'alimentation en air étant disposée pour déboucher dans la zone de cuisson à une position proche de la transition entre la zone de prétraitement et la zone de cuisson.

13. Procédé de préparation de produits alimentaires (9) dans un four tunnel (1, 20, 30, 40, 50, 50', 1'', 60, 70, 80, 90) selon l'une quelconque des revendications 1 à 12, dans lequel le procédé comprend l'étape consistant à:
- commander une différence de pression entre une première pression d'air dans la zone de prétraitement (4') et une seconde pression d'air dans la zone de cuisson (3') à l'aide de ladite unité d'équilibrage de pression afin de réduire sensiblement ou d'annuler un écoulement d'air dans la zone de prétraitement par l'intermédiaire de l'entrée de four tunnel (5).

14. Procédé selon la revendication 13, dans lequel l'unité d'équilibrage de pression comprend une unité d'extraction d'air (21) selon la revendication 3 ou la revendication 4, dans lequel le procédé comprend l'étape consistant à:
- extraire de l'air à un premier taux d'extraction d'air à partir de la région à ou près de l'entrée de four tunnel (5) pour commander la différence de pression afin de réduire sensiblement ou d'annuler un écoulement d'air dans la zone de prétraitement (4') par l'intermédiaire de l'entrée de four tunnel,
de préférence, dans lequel le procédé comprend en outre les étapes suivantes:
- déterminer une température, une humidité, une pression d'air et/ou un débit d'air dans la zone de prétraitement et/ou l'unité d'extraction d'air;
- régler le premier taux d'extraction d'air sur la base de la détermination de la température, de l'humidité, de la pression d'air et/ou du débit d'air dans la chambre de prétraitement (4) et/ou l'unité d'extraction d'air.

15. Procédé selon la revendication 13, dans lequel l'unité d'équilibrage de pression comprend une unité d'alimentation en air (61, 71) selon la revendication 12, dans lequel le procédé comprend en outre l'étape consistant à:
- fournir de l'air à un premier taux d'alimentation en air à travers ladite première entrée d'alimentation en air (62, V71, V72, V73) ou ladite ou lesdites entrées d'alimentation en air (V71, V72, V73) dans la zone de cuisson (3'), au moins à une position à ou près de la transition entre la zone de prétraitement (4') et la zone de cuisson, afin de commander la différence de pression pour réduire sensiblement ou annuler un écoulement d'air dans la zone de prétraitement par l'intermédiaire de l'entrée de four tunnel (5),
de préférence, dans lequel le procédé comprend en outre les étapes suivantes:
- déterminer une température, une humidité, une pression d'air et/ou un débit d'air dans la zone de prétraitement et/ou la zone de cuisson;
- régler le premier taux d'alimentation en air sur la base de la détermination de la température, de l'humidité, de la pression d'air et/ou du débit d'air dans la zone de prétraitement et/ou la zone de cuisson,
de préférence, le procédé comprenant en outre l'étape consistant à : fournir de la vapeur à la zone de cuisson à un premier taux d'ajout de vapeur, le premier taux d'ajout de vapeur étant déterminé sur la base de la température et/ou de l'humidité dans la zone de cuisson.
